# EUROPEAN PATENT SPECIFICATION

(11) **EP 1 706 699 B1**
(45) Date of publication and mention of the grant of the patent: **09.02.2011**
(21) Application number: 04815062.7
(22) Date of filing: 21.12.2004
(51) Int. Cl.: F28F 9/04

(54) **EXCHANGE DEVICE WITH POTTED HOLLOW CONDUITS AND METHODS OF APPLICATION**
AUSTAUSCHVORRICHTUNG MIT VERGOSSENEN HOHLFASERN UND DESSEN VERWENDUNG
DISPOSITIF D'ECHANGES AVEC DES TUBES CREUX ENROBES ET SON UTILISATION

(30) Priority: 22.12.2003 US 531666 P; 07.07.2004 US 586363 P
(43) Date of publication of application: 04.10.2006
(73) Proprietor: Entegris, Inc., Billerica, MA 01821-4600 (US)
(72) Inventor: DOH, Cha, P., Sudbury, MA 01776 (US); SMITH, Joseph, E., N. Andover, MA 01845 (US)
(74) Representative: Gambell, Derek
(86) International application number: PCT/US2004/042941
(87) International publication number: WO 2005/063366

(56) References cited:
- EP-A- 0 706 818
- EP-A- 0 941 759
- WO-A-03/029744
- WO-A-03/029775
- GB-A- 2 273 459
- US-A- 4 867 233
- US-A- 6 149 422
- US-A- 2003 232 184
- US-B1- 6 582 496
- PATENT ABSTRACTS OF JAPAN vol. 1997, no. 01, 31 January 1997 (1997-01-31) -& JP 08 229359 A (KANEGAFUCHI CHEM IND CO LTD), 10 September 1996 (1996-09-10)
- PATENT ABSTRACTS OF JAPAN vol. 017, no. 355 (C-1079), 6 July 1993 (1993-07-06) -& JP 05 049875 A (MITSUBISHI RAYON CO LTD), 2 March 1993 (1993-03-02)

## Description

### BACKGROUND AND SUMMARY

Hollow fibers and thin walled hollow tubes have been used in mass transfer, heat exchange, and cross flow particle filtration devices. In these applications the hollow tubes or porous fibers provide a high surface to volume ratio which permits a greater transfer of heat and mass in a smaller volume than a device made with flat sheet materials of similar composition.

A hollow fiber or a hollow tube includes an outer diameter and surface, an inner diameter and surface, and a porous or non-porous material between the first and second surfaces or sides of the tube or fiber. The inner diameter defines the hollow portion of the fiber or tube and is used to carry one of the fluids. For what is termed tube side contacting, a first fluid phase flows through the hollow portion, sometimes called the lumen, and is maintained separate from a second fluid phase, which surrounds the tube or fiber. In shell side contacting, the first fluid phase surrounds the outer diameter and surface of the tube or fibers and the second fluid phase flows through the lumen. In an exchange apparatus, packing density relates to the number of useful hollow fiber or hollow tubes that are available in the apparatus.

Examples of applications in semiconductor manufacturing where heating or cooling of a liquid is used include sulfuric acid and hydrogen peroxide photoresist strip solutions, hot phosphoric acid for silicon nitride and aluminum metal etching solutions, ammonium hydroxide and hydrogen peroxide SC1 cleaning solutions, hydrochloric acid and hydrogen peroxide SC2 cleaning solutions, hot deionized water rinses, and heated organic amine based photoresist strippers. Mass exchange with a fluid is important where for example particles are removed from a fluid during filtration, where gases like ozone or hydrogen are added to water, or where dissolved gases like oxygen are removed from fluids such as copper electroplating solutions.

Exchange devices have been potted by preparing a shell or housing with a thin layer of a potting material sintered to the inside diameter surface of the shell. The device assembly, including hollow fiber media, is then potted by surrounding the assembly with a thermoplastic resin, and raising the temperature in a controlled environment to melt the resin, thus filling the space around the media at one end of the device. The resin would flow sufficiently into the shell to encapsulate the media and adhere to the sidewall of the shell that had been sintered with the potting material in an earlier step. Other potting methods previously used include: potting the device with hollow tubes outside of the shell and machining the potted area to create a bonding surface and thermally bonding the potted material to a housing; potting the device with tubes outside of the shell, machining the potted area to create a mating flange and sealing surface which could be mechanically joined to the shell using an o-ring or other contact sealing method- these parts could be held together by a snap ring, threaded fasteners and or a secondary bonding operation. Additional methods include inserting pins in each fiber, potting the assembly and removing the pins after potting. Some exchange devices are made by filling the lumen inside diameter with a binder and extracting out the binder after potting and machining. US 6582496-B1 (Cheng Kwok-shun et al.) discloses a fully perfluorinated thermoplastic hollow fiber membrane fluid-fluid contactor and a process for manufacturing the contactor is described. The contactor has a unitary end structure produced by a single step potting and bonding process. The contactor can be operated with low surface tension liquids and in harsh chemical environments. US 6149422-A (Cesaroni Anthony Joseph) discloses a method for bonding a tube into an article, each of which is formed from a thermoplastic polymer, especially an aliphatic polyamide. The article has a plurality of channels into which tubes are placed in sliding engagement. The article is moved towards a heating block having pins, such that a pin is inserted into each tube. The article and heating block are brought into a juxtaposed position such that the polymer of the tubes melts and forms a coating on said article. The method is particularly useful in the formation of tubed heat exchangers, for example with 100-300 or more tubes, in one cycle. According to EP 0706818-A (Kanegafuchi Chemical Ind) a hollow fiber type filter having a simple structure and also having an excellent heat resistance which can withstand a rapid temperature change due to high temperature generated in, for example, a steam sterilization is disclosed. The hollow fiber type filter comprises a case and a plurality of hollow fiber type filter membranes which are bundled and fixed with a potting material in the case, wherein a stop ring designed such that a thickness thereof increases inwardly is provided on an inner surface of the case into which the potting material is poured, and air release portions which penetrate the stop ring in the direction of the thickness of the stop ring are formed at an appropriate portion of the stop ring.

The present invention are exchange devices as defined in claim 1 that include a housing, shell, or sleeve bonded to one or more thermoplastic potted hollow conduits, the housing, shell or sleeve can includes structures such as grooves or channels on a surface of the housing. Where grooves are present, the thermoplastic potting material fills at least a portion of the grooves in the housing surface and bonds to a portion of them to form a unitary end structure with the potted hollow conduits. The unitary end structure may then be cut open to expose the hollows of the conduits at each potted end of the device. The structures permit potted devices to be used at higher temperatures and pressures while maintaining the fluid integrity of the potted device. Exchange devices of the present invention and methods for making them include any device that requires potting the working media into a housing meant for containment of the process fluid including but not limited to fully bonded membrane contactors, gas contactors, ozone contactors, degassers, heat exchangers, heaters, gas scrubbers, hollow fiber filters, and combinations of these. The device can be made using thermoplastic materials, including perfluorinated thermoplastics. Preferably the exchange device is made from one or more perfluorinated thermoplastics.

The present invention improves the strength of such potted devices by creating a fused bond and optionally a mechanical interlock between the potting material and structures such as channels or grooves in the housing shell. The interlock and or bond serves as a molded in sealing surface, that has mechanical strength, preventing separation of the mating parts. The grooves, and their additional surface area, some of which may not be parallel to the housing walls, result in fusion and adhesion of the potting resin to at least a portion of the surfaces of the groove. Without wishing to be bound by theory, it is believed that this bond can add a shear component to the radial force created by thermal or pressure expansion of the housing shell. This shear component is believed to improve the strength of the device.

One embodiment of the present invention is an exchange device that includes a thermoplastic housing having one or more thermoplastic hollow conduits that can include hollow tubes, porous hollow fibers, or a combination of these fluidly sealed to at least one end of a housing or sleeve by a thermoplastic resin. The thermoplastic resin is fluidly sealed, by fusion and optionally by mechanical bonds, to an end portion of the housing to one or more structures such as protrusions, grooves, or a combination of these in the housing. The housing structures and resin form a unitary end structure where the resin, conduits, and housing fuse at a portion of the housing. The unitary end structure may be machined or cut to open the hollows of the conduits. The exchange device may have a sintered thermoplastic coating on the inside of the housing including the surfaces of the grooves. The exchange device housing may include fluid fittings in fluid communication with the shell side and fluid fittings in fluid communication with the lumen or bore side of the device. The exchange device is made from various thermoplastic materials, preferably the thermoplastics are perfluoropolymers such as but not limited to FEP, PFA, MFA or a combination of these. The exchange device includes
co-extruded hollow tubes or a combinations of these. Preferably the ends of the potted hollow conduits are open by cutting following the potting process. The mechanical interlock and or fusion of the potting resin with the housing grooves serves to entrain the shell and potted area together, particularly when stressed due to temperature or pressure. Expansion or contraction of the housing more than the potted material is reduced, keeping the assembly (housing, potting, and hollow conduits) integral.

Another embodiment of the present invention is an exchange device that includes a thermoplastic housing having one or more fluidly sealed hollow conduits potted in a thermoplastic resin where the thermoplastic resin occupies a volume of one or more grooves on an interior surface of the housing. During potting, the grooves and resin with hollow conduits form a unitary end structure where the thermoplastic resin and housing fuse at a portion of the groove and the resin and hollow conduits fuse to form a unitary end structure. The housing inner surface and grooves may be coated with a sintered thermoplastic material to which the potting resin may fuse. The potted hollow conduits may be opened by cutting or machining a portion of the unitary end structure to expose the conduit lumens. Preferably the exchange device is constructed so that fluid contacting surfaces are perfluorinated, more preferably the exchange device is constructed of all perfluorinated thermoplastics.

Another embodiment of the present invention is an apparatus for exchanging energy or mass with a process fluid used to clean or coat substrates. The apparatus includes an exchange device according to claim 1 having one or more thermoplastic hollow conduits fused at a first end portion of the conduits to a thermoplastic resin. The thermoplastic resin can be fused to an interior surface of a first sleeve or first end of a thermoplastic housing or fused to one or more structures on an interior surface of a first sleeve or to a first end of thermoplastic housing. A second end portion of the thermoplastic hollow conduits are fused with a thermoplastic resin. The thermoplastic resin can be fused to an interior surface of a second sleeve or second end of the thermoplastic housing or the resin can be fused to one or more structures on an interior surface of a second sleeve or to structures on a second end of the thermoplastic housing. A source of working or exchange fluid is connected to a first fluid inlet of the exchange apparatus and a source of process fluid connected to a second fluid inlet of the exchange apparatus. The first and second fluid inlets are separated by the hollow tubing wall and by the potting material bonded to the housing or sleeves. A fluid controller in fluid communication with the second fluid inlet of the exchange device can be used to provide controlled amounts of conditioned fluid to one or more substrates to be treated by the apparatus. The fluid controller may provide conditioned fluid to a tank or weir containing one or more substrates or it may provide conditioned fluid directly to a stationary, rotating, or translating substrate. The fluid controller can be but is not limited to a fluid pump, a dispense pump, or a liquid flow controller. Preferably the exchange fluid is a source of temperature controlled fluid. Preferably the substrate to be treated includes silicon.

Another embodiment of the present invention is an exchange device that includes a thermoplastic housing having one or more fluidly sealed hollow conduits potted in a thermoplastic resin. The exchange apparatus includes one or more co-extruded thermoplastic hollow conduits and has a housing or one or more sleeve where the hollow conduits are bonded to a portion of the housing by one or more structures such as protrusions, grooves, or a combination of these in the housing. The resin can occupy a volume of one or more grooves on an interior surface of the housing and bonds to the surface. The structures, which can be grooves, and resin form a unitary end structure with the hollow conduits where the resin and housing fuse at a portion of the grooves or a coating on the housing to form the unitary end seal with one or more hollow conduits. The device may be used to treat a fluid while maintaining the fluid integrity of the device, for example the bond between the housing and the potting resin or hollow conduits and resin, at temperatures below the melting point or the continuous use temperature of the thermoplastic. This temperature may depend upon the pressure of fluids on either side of the hollow conduit walls. The device may be used to treat a fluid while maintaining the fluid integrity of the device, for example the bond between the housing and the potting resin or hollow conduits and resin at a temperatures of at least 50 °C, preferably at least 140°C, more preferably to 200 °C, and most preferably 200°C or more but below the melting or continuous use temperature of the thermoplastic materials. Preferably the exchange device maintains its fluid integrity at these temperatures when the pressure of the fluid is at least 68.95 KN/m² (10 psig) preferably at least 344.70 KN/m² (50 psig) and more preferably 482.63 KN/m² (70 psig) or greater. The integrity of the device can be maintained for an exchange apparatus having a packing density of hollow conduits from 3-99 percent by volume, preferably 20-70 percent by volume and is more preferably from 40-60 percent by volume.

A method of making an exchange device of the present invention includes flowing a thermoplastic material into an end portion of a housing or sleeve, the housing or sleeve optionally having structures such as protrusions, grooves, or a combination of these on an inner surface of the housing or sleeve; the thermoplastic material flows between one or more hollow conduits positioned within the housing or sleeve. Grooves in the housing can be interconnected by other grooves or vent channels along a surface or axis of the housing or sleeve. The method further includes forming a fluid tight seal between the thermoplastic material and the hollow conduits and a fluid tight seal between the thermoplastic potting resin and the housing to form a unitary end structure. Where grooves are used, preferably the thermoplastic potting resin occupies at least a portion of the grooves in the housing or sleeve and even more preferably the resin fuses with a portion of the groove or a sintered thermoplastic material coating the housing and groove surfaces. The hollow portions of the conduits can be cut opened or machined to permit fluid flow through the hollow conduits. Preferably the housing has a coating of a thermoplastic material capable of fusing with the potting resin on one or more of the housing surfaces.

Another embodiment of the present invention is a method of treating a fluid according to claim 6 that includes flowing a process fluid to be treated on a first side of at least one hollow conduit having two sides and a thermoplastic wall interposed between them, the hollow conduit potted in a fluid tight manner within a thermoplastic material. The thermoplastic potting material is bonded to housing for the device, the housing has a thermoplastic sintered, co-extruded, or molded to at least a portion of the inner surface, to a portion of one or more structures, or a combination of these on the inside surface of the housing that can fuse with the potting resin. Where grooves are present on the housing, at least a portion of the housing grooves are bonded to the thermoplastic material to form a fluid tight seal between the thermoplastic material, the hollow conduit and the housing. The method includes exchanging energy, mass, or a combination of these with the process fluid to be treated by flowing an exchange or working fluid on a second side of the hollow conduits. The energy, mass, or a combination of these is transferred to or from the process fluid to the exchange fluid through the hollow conduit wall. The hollow conduits are one or more co-extruded non-porous hollow tubes, co-extruded skinned or unskinned porous hollow tubes, or a combination of these.

Exchange devices in embodiments of the present invention are advantageous in that the structures such as grooves permit bonding of the hollow conduits to the housing or sleeve and permit venting of gases, generated or dissolved, that coalesce to form bubbles in the thermoplastic resin melt. The thermoplastic resin, preferably a perfluorinated thermoplastic resin melts at a temperature of greater than about 100°C. The thermoplastics used in the present exchange devices fuse to a portion of the hollow conduits and to the housing or grooves during the potting process. The exchange devices of the present invention can be made from all perfluorinated materials bonded together eliminating the need for mechanical locking pins, silicon resins, and other non-perflorinated polymeric bonding resins. Further, the exchangers of the present invention eliminate the need for a reinforcing rib bonded to the housing. Eliminating the reinforcing rib decreases the costs of manufacture and also permits a greater number of hollow conduits to be used in the device resulting in higher contact surface area and packing density that improves transfer performance and efficiency. By providing structures such as grooves in the housing, endcap, or sleeve that the hollow conduits are bonded with in the exchange devices of the present invention, a wide variety of devices including immersion exchangers, weldable zero clearance exchangers, and exchangers with one or more different end caps can be made using readily available or readily machined parts. Advantageously, for high purity applications, stress relief channels in the potting resin, which can trap fluids and contaminants are not required in exchange devices of the present invention. This greatly simplifies the manufacturing process and permits a greater numbers of thin walled hollow conduits to be used in exchange devices.

### DESCRIPTION OF THE DRAWINGS

In part, other aspects, features, benefits and advantages of the embodiments of the present invention will be apparent with regard to the following description, appended claims and accompanying drawings where:

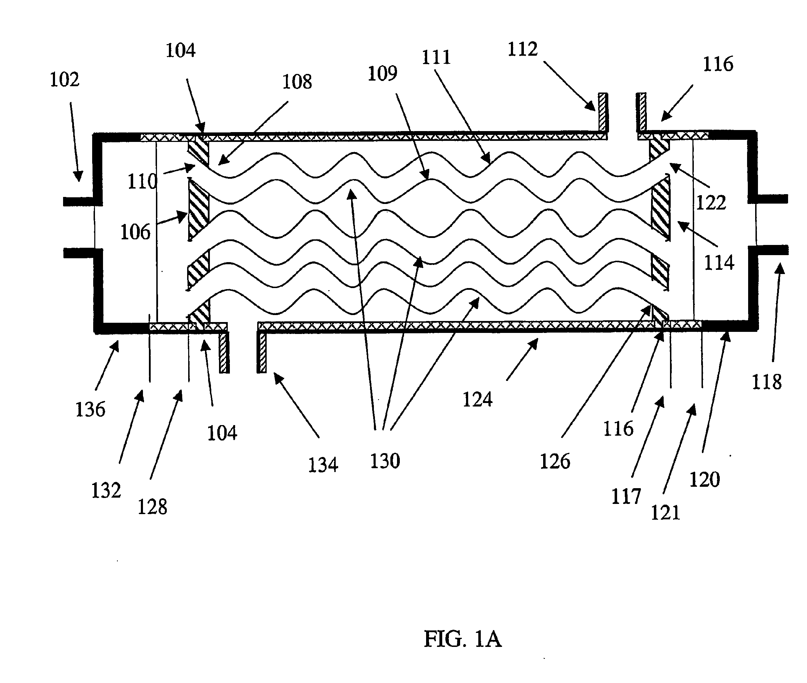

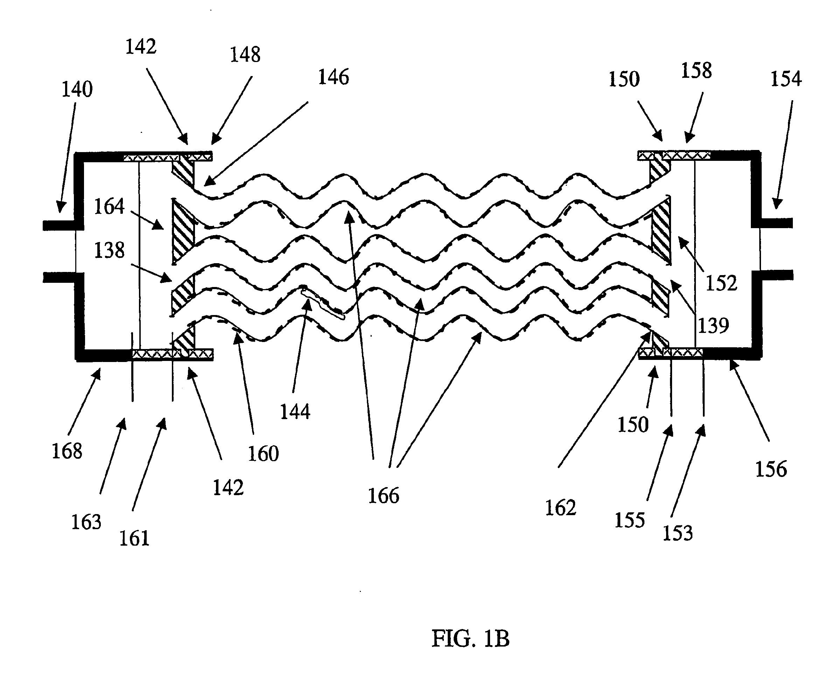

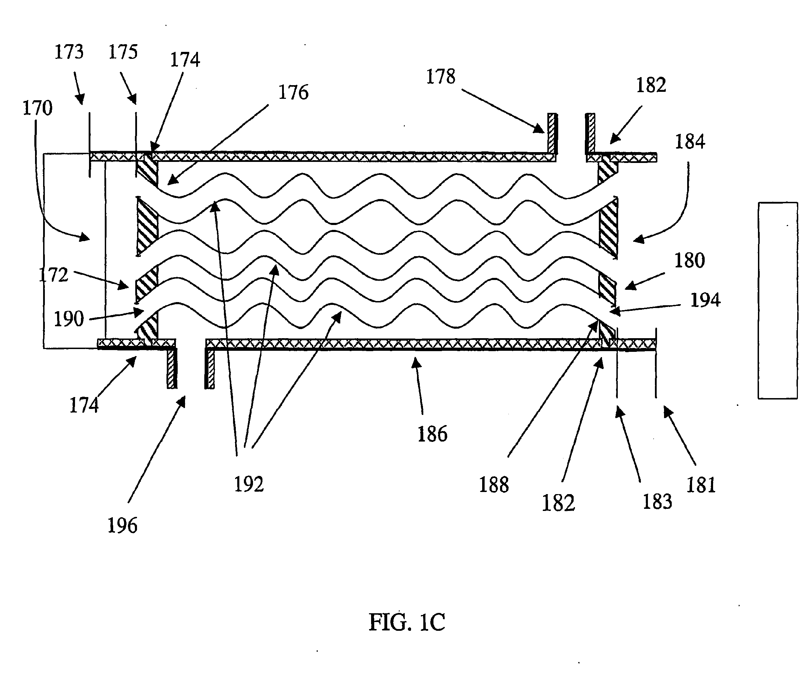

FIG. 1 illustrate versions of exchange devices of the present invention for heat transfer, mass transfer or a combination of these; (A) illustrates a housing with endcaps which has one or more hollow conduits including hollow tubes or hollow fibers, or a combination of these fluidly sealed to the housing by potting them into a thermoplastic resin, the resin and hollow conduits are initially bonded into the housing to form a unitary end structure at each end of the housing. This unitary end structure can later be cut to open the tubes; the thermoplastic potting material is shown filling at least a portion of a groove or channel formed in the housing; (B) illustrates a an exchange device having endcaps bonded to separate housings or sleeves connected by one or more hollow conduits bonded to a thermoplastic resin bonded to the housings; (C) illustrates an exchange device without fluid endcaps;

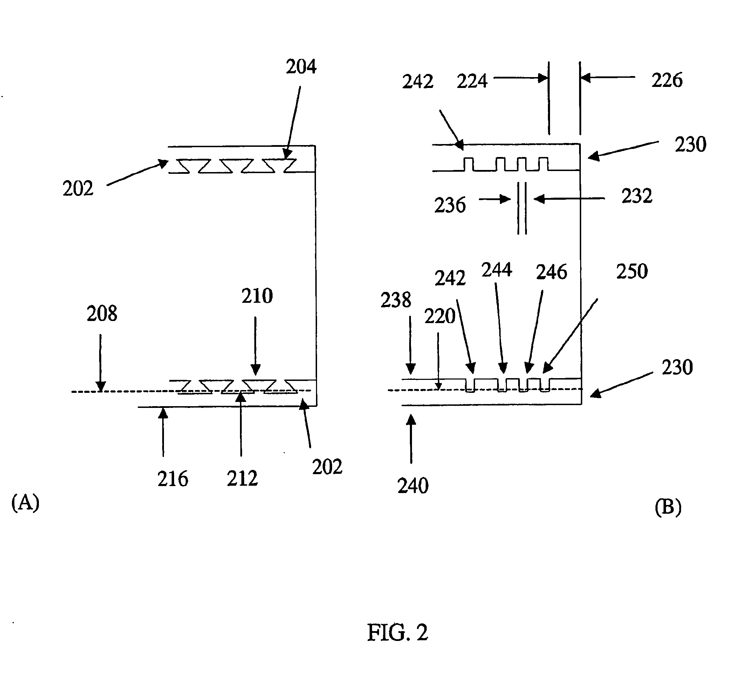

FIG. 2 is an illustration of non-limiting (A) trapezoidal, and (B) rectangular shaped grooves or channels in a housing or sleeve wall that can add mechanical advantage, bonding, and increased surface area to the interface between the shell and potting; the channels may coated with a sintered thermoplastic material for bonding and may have various shapes;

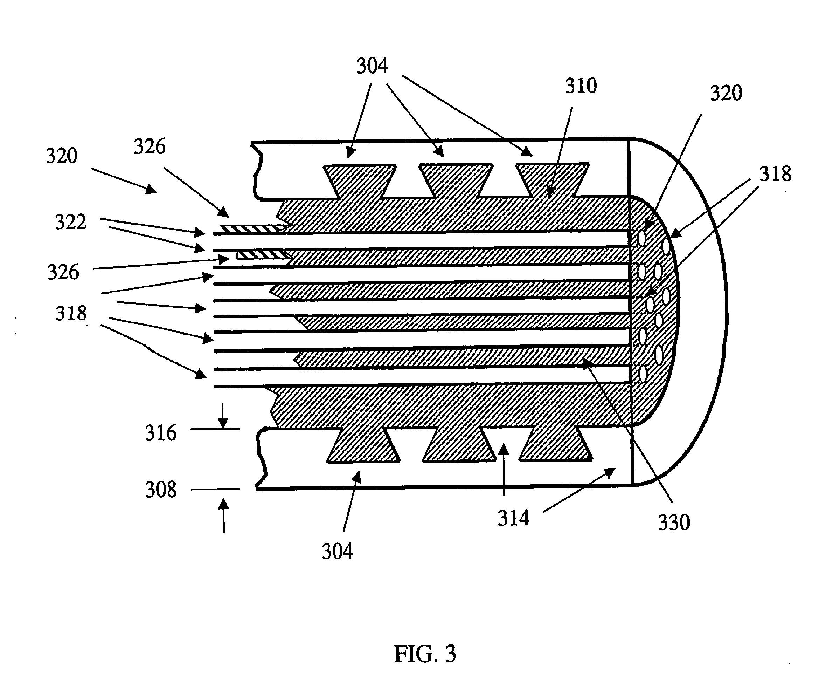

FIG. 3 is a schematic illustration of a end portion of a housing or sleeve that includes one or more grooves or channels with thermoplastic resin filling at least a portion of the channels and preferably fusing to a portion of the channels and housing surfaces; opened hollow tubes, porous hollow fibers, or a combination of these are shown potted into the resin to form a fluid tight seal with the housing walls and grooves; the housing walls and grooves may have fused to their surface a powdered or molded thermoplastic material;

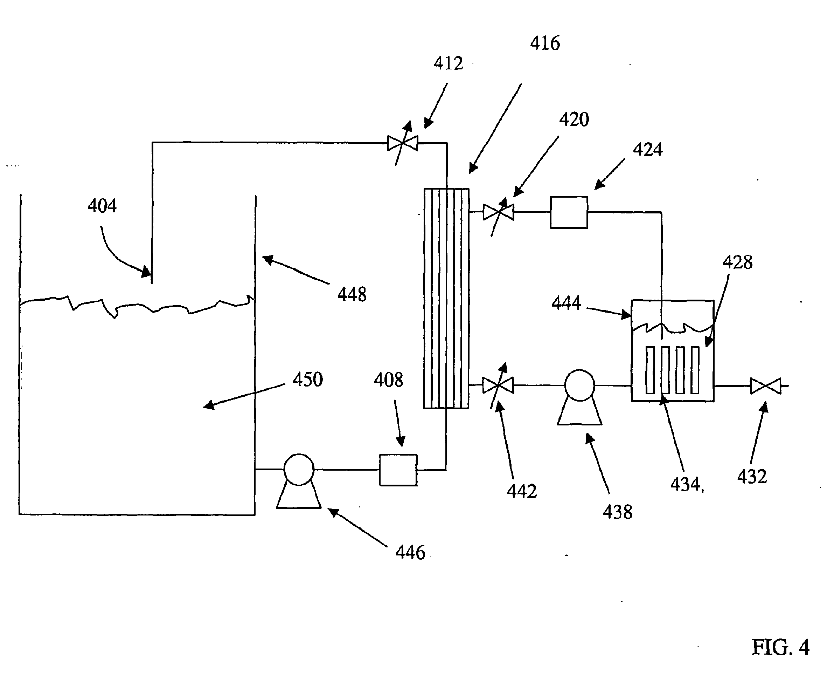

FIG. 4 is an illustration of an exchange device of the present invention, preferably with grooves in the housing and hollow conduits potted in a thermoplastic resin, the resin bonding with the housing walls and grooves, the exchange device is illustrated as part of an apparatus for conditioning the temperature of a process fluid used to clean, coat, or chemically modify substrates in a bath or a substrate holder such as a single wafer cleaning tool (not shown);

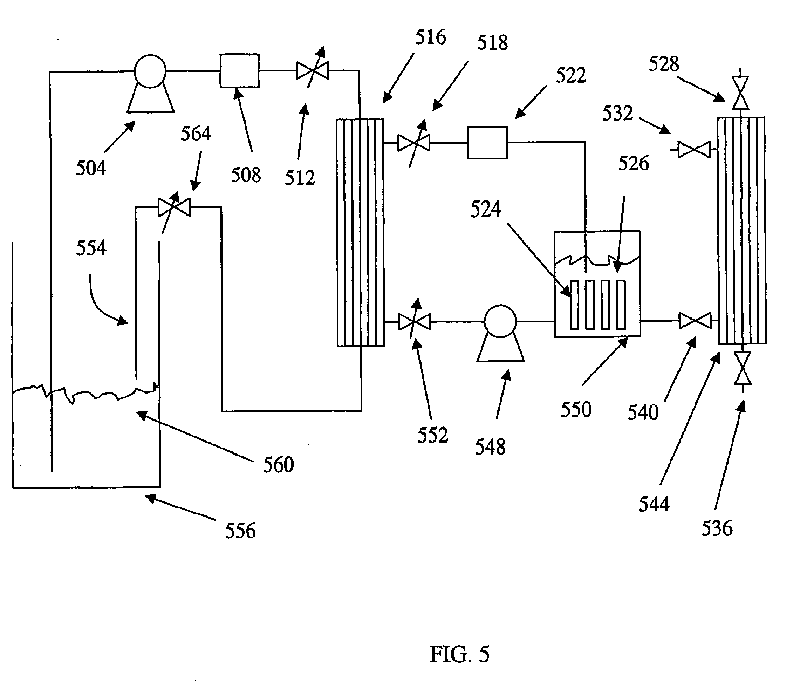

FIG. 5 is an illustration of one or more exchange device of the present invention, preferably with one or more grooves in the housing, with hollow conduits potted to each end of the housing interior to form a fluid tight seal with a thermoplastic resin that fuses with the housing walls, grooves, and hollow conduits; the exchange devices are used as part of an apparatus for conditioning a process fluid and conditioning the process fluid prior to discharge;

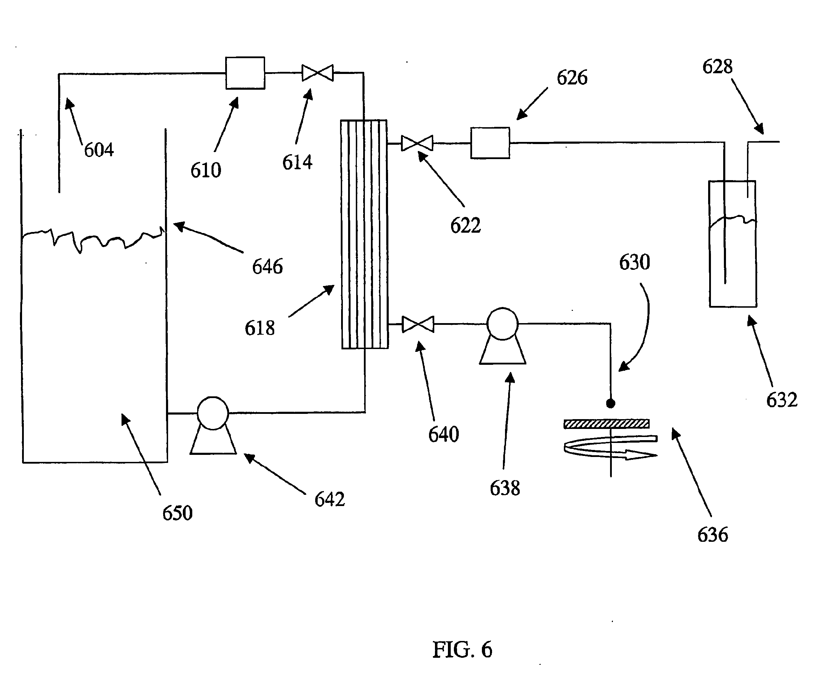

FIG. 6 is an illustration of an exchange device, preferably with one or more grooves in the housing and hollow tubes or hollow fibers potted to form a fluid tight seal in a thermoplastic resin which bonds or fuses with the housing walls and grooves in the housing; the device is used as part of an apparatus for conditioning a process fluid prior to dispense on to a substrate which may be rotating, translating, or stationary. In this non-limiting illustration, fluid from a fluid source which may be for cleaning the substrate or for coating it is filtered with an optional particle filter and energy, mass, or a combination of these is added to the process fluid or removed from the process fluid by the exchanger as it passes, preferably in a counter-current manner, through the exchanger. The exchanger transfers energy to or from the process fluid through the hollow tube walls interacting with the exchange fluid. Temperature, pressure and flow controllers may be used to control the amount of fluid dispensed onto the substrate. The conditioned process, coating, or cleaning fluid can be delivered by a pump to the substrate which may be stationary, translating, or rotating. The apparatus may include particle filters, valves, flow controller and pump, or the fluid may be from a pressurized source;

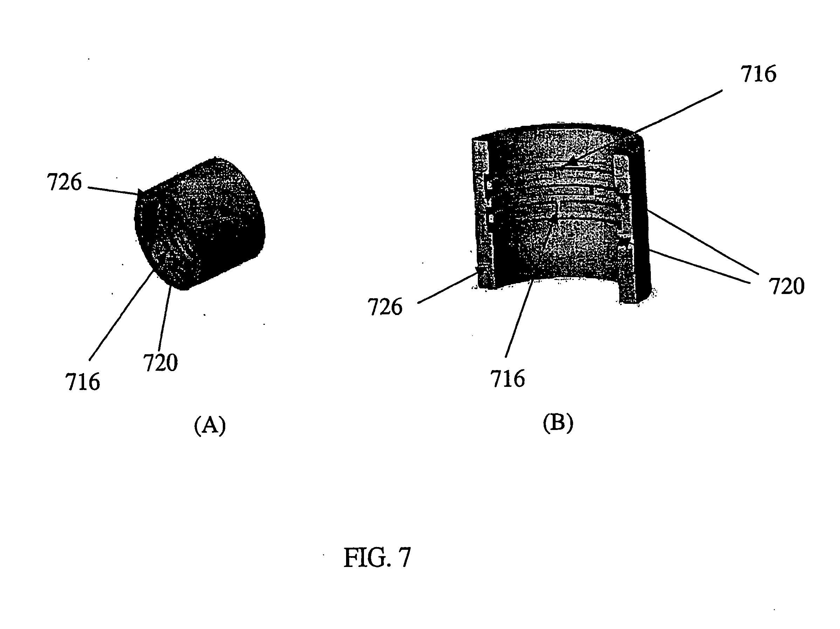

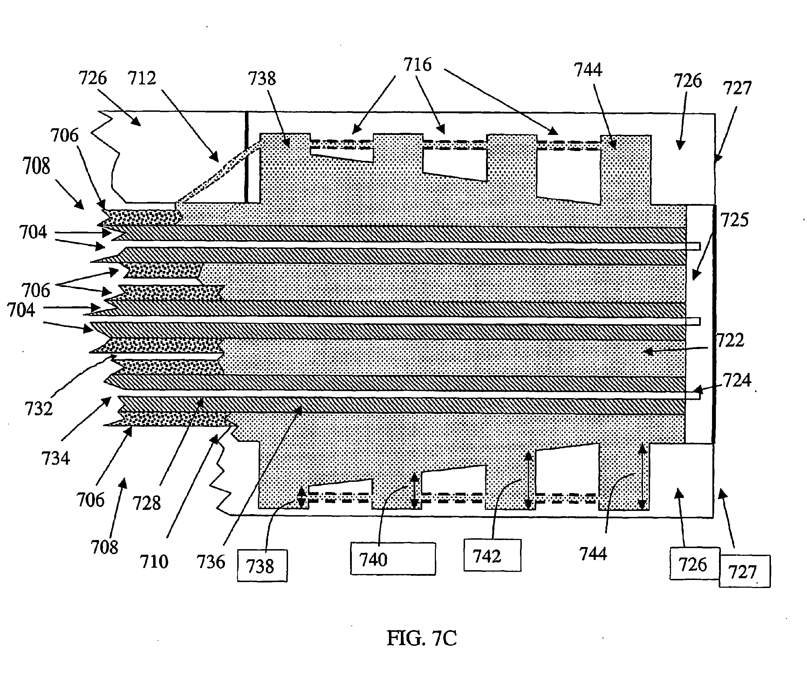

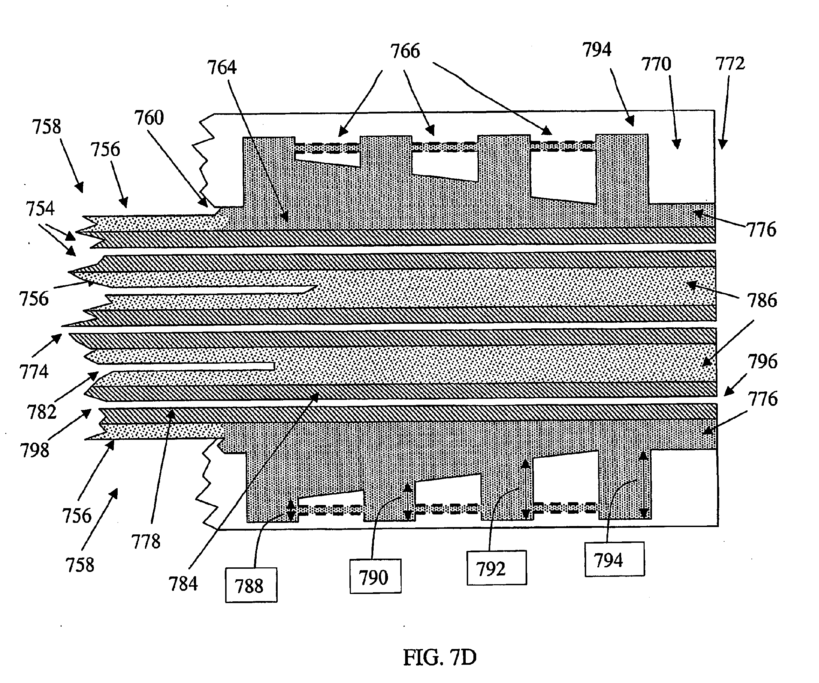

FIG. 7A is an illustration of an end portion of a housing or a end potion of a sleeve that can be used for an exchange apparatus showing one or more parallel grooves on the inside of the shell, the grooves illustrated having venting slots or channels interconnecting parallel grooves; a completed exchange device includes one or more end portions; FIG. 7B illustrates a cross-section view of FIG. 7A; FIG. 7C illustrates an end portion of a housing or sleeve in cross section with one or more hollow tubes potted in a thermoplastic resin to the sleeve; FIG. 7D illustrates an end portion of a housing or sleeve in cross section with one or more co-extruded hollow tube fused together at an end potion and potted in a thermoplastic resin to the sleeve;

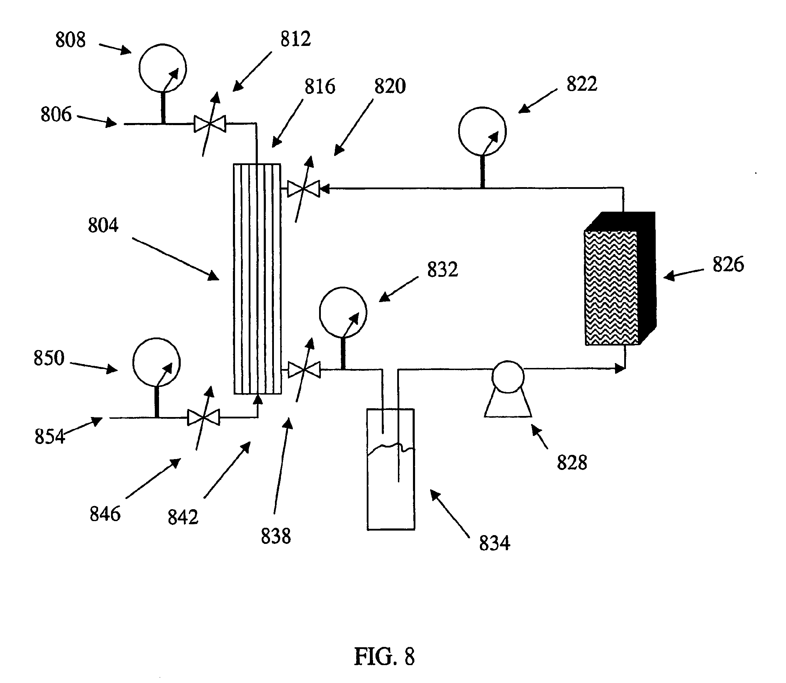

FIG. 8 is an illustration of a test manifold that may be used for testing an exchange apparatus for leakage, seal integrity, and performance.

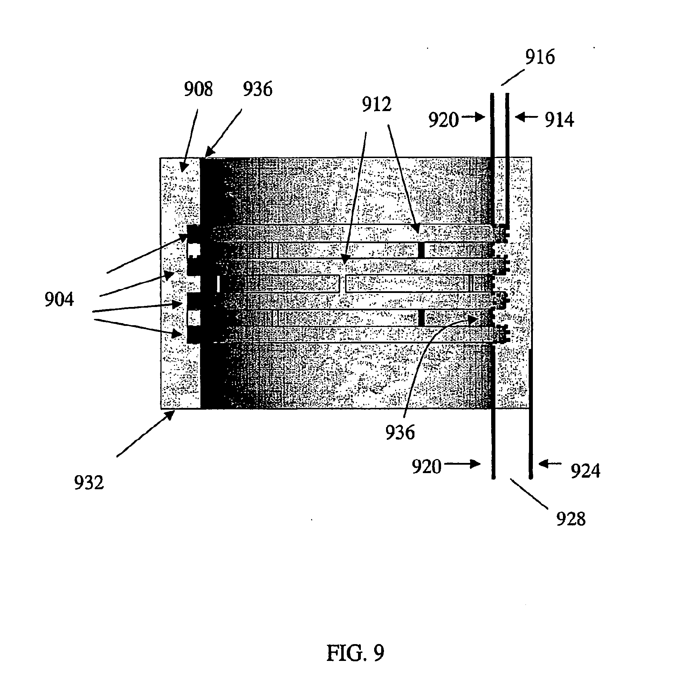

FIG. 9 is an illustration of a cross section of an end portion of an exchange device housing or sleeve showing one or more grooves in a portion of the wall of the housing, the depth of the grooves in the housing wall as measured from the inner wall of the housing, one or more of the grooves interconnected by slots or channels in the housing wall, a powdered thermoplastic material is shown sintered to the housing or sleeve wall;

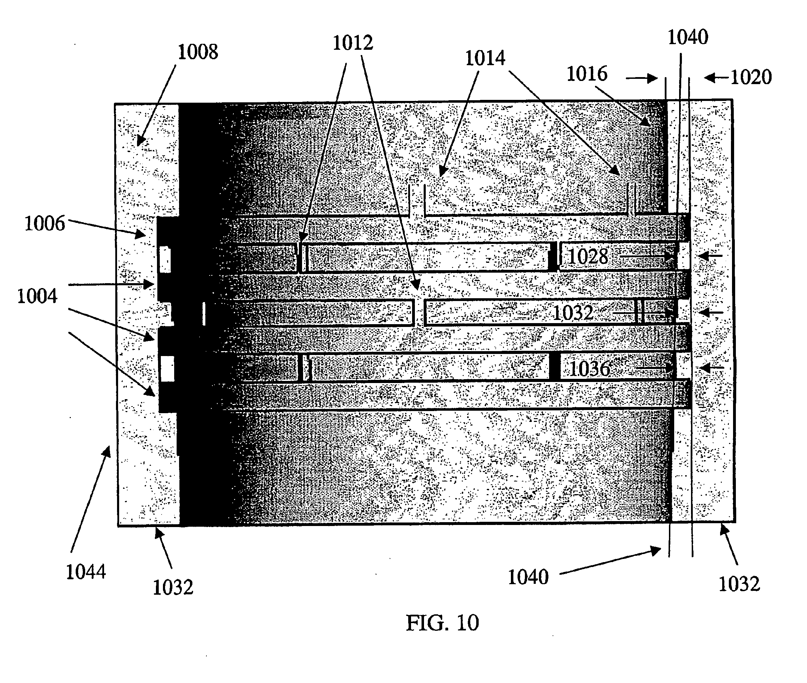

FIG. 10 is an illustration of a cross section of an end portion of an exchange device housing or sleeve that has one or more parallel grooves in a portion of the wall of the housing, the grooves having different wall heights between them and one or more grooves or slots along an axis of the housing interconnecting the parallel groove in the housing or sleeve wall;

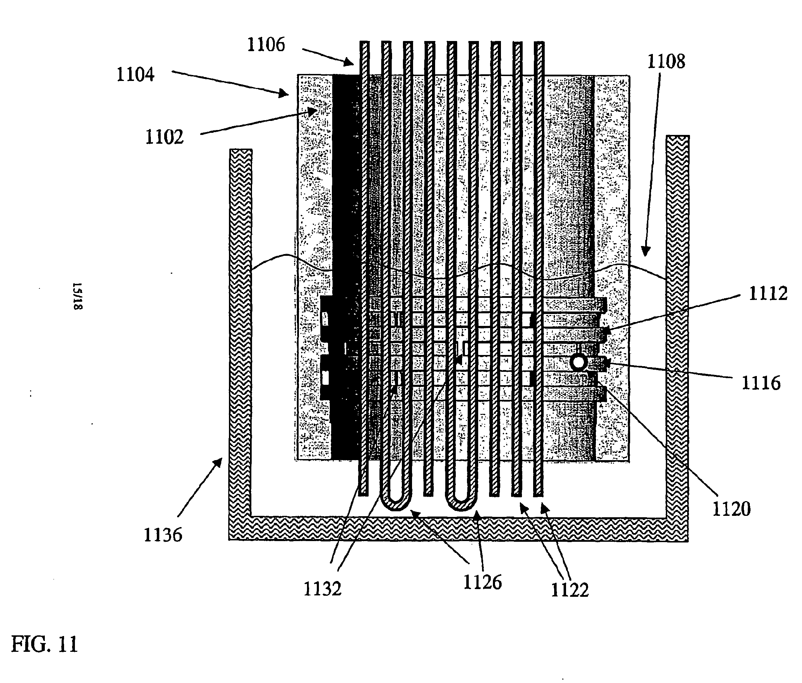

FIG. 11 is an illustration of a cross section of an end of a housing or sleeve of an exchange device with one or more parallel grooves and one or more grooves along an axis of the housing interconnecting adjacent parallel grooves in the housing wall, the wall height between adjacent grooves varying along the length of the housing; hollow conduits such as hollow tubes or fibers are shown being potted in a heated vessel;

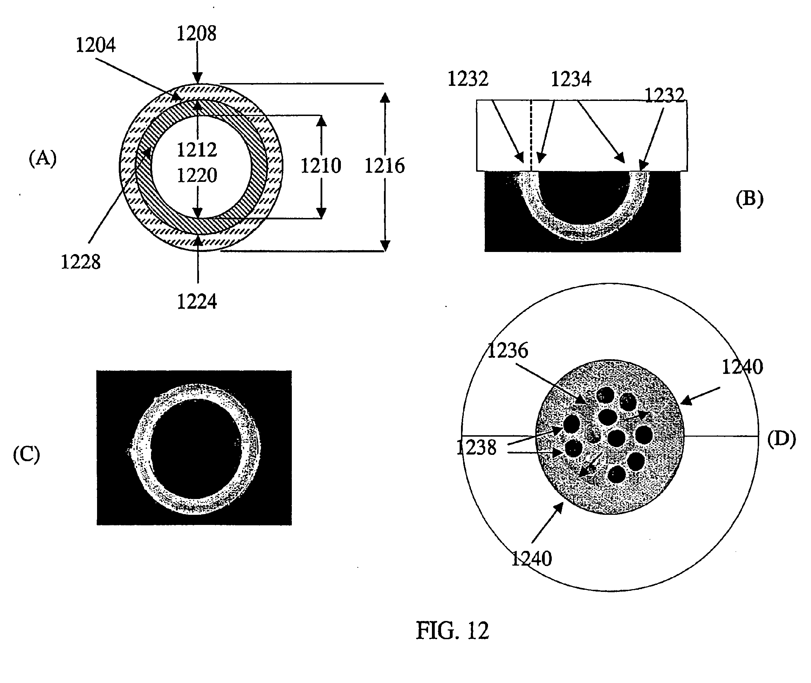

FIG. 12 (A) is an illustration of the cross section of a co-extruded tube; (B) is an image of a portion of the cross section of a co-extruded perfluorinated thermoplastic tube with an inner PFA layer and an outer MFA layer; (C) is a full image of the cross section of the co-extruded tube in (B); (D) is a cross section of the co-extruded tubes in (C) potted in a thermoplastic resin and bonded to a thermoplastic tube.

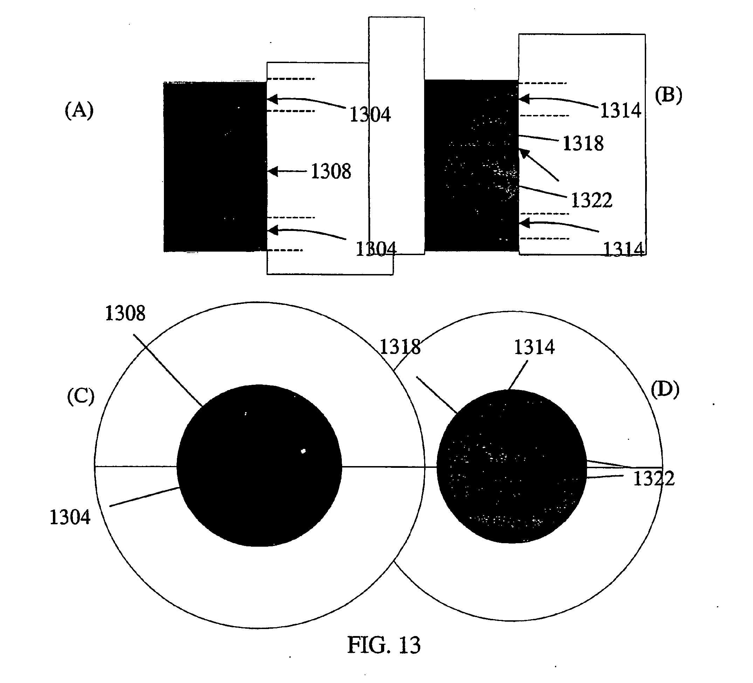

FIG. 13 (A) is an image of a portion of the cross section of collapsed hollow tubes fused to a potting resin; (B) is an image of a portion of the cross section of co-extruded pertluorinated tubes potted in a perfluorinated thermoplastic sleeve; (C) is a full image of the cross section of collapsed hollow tubes fused to a potting resin from (A); (D) is a full image of the cross section of co-extruded perfluorinated tubes potted in a perfluorinated thermoplastic sleeve from (B);

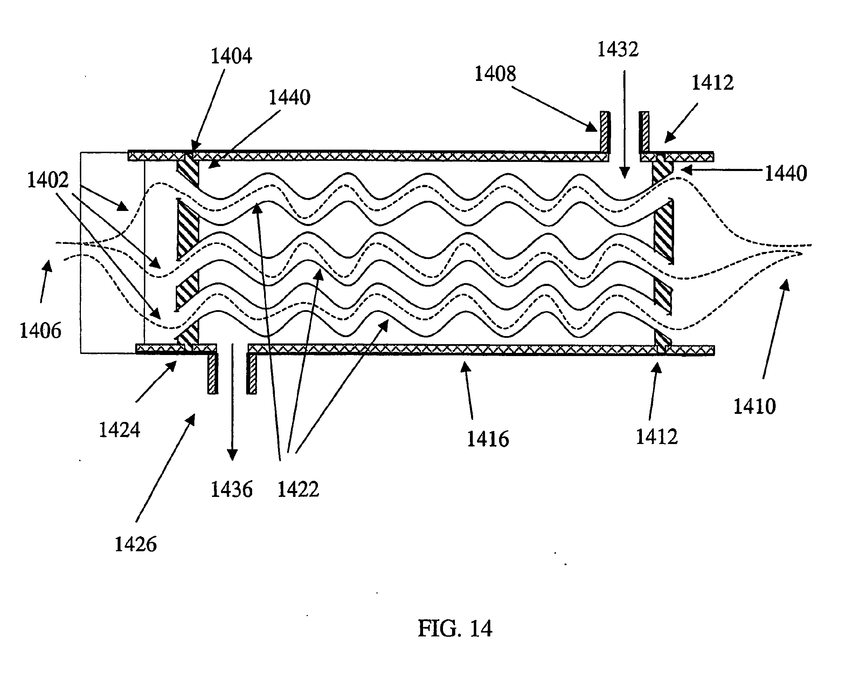

FIG. 14 illustrate in cross section versions of an exchange devices of the present invention for heat transfer; the housing includes one or more potted hollow conduit that contain one or more resistive filaments in the hollow, the resin and hollow conduits are bonded to one or more grooves in the wall of the housing.

### DETAILED DESCRIPTION

Before the present compositions and methods are described, it is to be understood that this invention is not limited to the particular molecules, compositions, methodologies or protocols described, as these may vary. It is also to be understood that the terminology used in the description is for the purpose of describing the particular versions or embodiments only, and is not intended to limit the scope of the present invention which will be limited only by the appended claims.

It must also be noted that as used herein and in the appended claims, the singular forms "a", "an", and "the" include plural reference unless the context clearly dictates otherwise. Thus, for example, reference to a "hollow tube" is a reference to one or more hollow tubes and equivalents thereof known to those skilled in the art, and so forth. Unless defined otherwise, all technical and scientific terms used herein have the same meanings as commonly understood by one of ordinary skill in the art.

Versions of exchange devices of the present invention can include one or more thermoplastic hollow conduits fused or bonded in a potting process at a first end portion of the conduits to a thermoplastic resin. The thermoplastic resin bonded to the conduits can be fused or bonded to the interior surface and one or more structures by potting on an interior surface of a first sleeve or to structures on the first end of a thermoplastic housing. The second end portion of the thermoplastic hollow conduits are fused or bonded with a thermoplastic resin; the thermoplastic resin fused to the interior surface or to one or more structures on an interior surface of a second sleeve or to structures on a second end of the thermoplastic housing. The hollows of the fused conduits may be opened by cutting the resin and opening the conduit ends. The surface on the housing or sleeves that the thermoplastic resin bonds to can also include structures such protrusions, grooves, or a combination of these; preferably the structures are grooves in the surface of the housing or sleeves. The exchange device hollow conduits can be hollow tubes, porous hollow fibers, skinned hollow fibers, thermoplastic tubes, co-extruded hollow tubes, or combinations of these.

Exchange devices of the present invention and methods for making them include potting a working media, for example thin walled hollow tubing or porous hollow fibers, into a housing or one or more sleeves with a thermoplastic resin. The hollow tubes or fibers potted in the housing separate through their walls a process fluid to be conditioned from an exchange or working fluid that can transfer mass, energy, or a combination of these with the process fluid. Such exchange devices can include but are not limited to fully bonded membrane contactors, gas contactors, ozone contactors, degassers, heat exchangers, gas scrubbers, heaters, hollow fiber filters, or combinations of these. These devices may be used to exchange or transfer heat, mass, or a combination of these between fluids separated by hollow thermoplastic tubes. The devices may be immersion style or include a housing for separately containing the process and exchange fluids.

The exchange device includes one or more co-extruded thermoplastic hollow conduits fused at a first end portion of the conduits to a thermoplastic resin; the thermoplastic resin fused to an interior surface of a first sleeve or to a first end of thermoplastic housing. A second end portion of the thermoplastic hollow conduits are fused with a thermoplastic resin, the thermoplastic resin fused to an interior surface of a second sleeve or to a second end of the thermoplastic housing. The ends of the hollow conduits from the potted unitary end structure may be opened to fluid flow by cutting or milling a portion of the thermoplastic resin and conduits . Optionally the exchange device housing or sleeve includes one or more fluid fittings. The co-extruded hollow conduits may include a thermally conductive material mixed or combined with one or more of the layers that make up the hollow conduit. The thermoplastic housing or sleeve for the exchange device is chosen to have a composition that permits it to fuse with the potting resin during the potting process. It may include housings or sleeves that are made from a thermoplastic, thermoplastics with a sintered material on its interior surface, co-extruded thermoplastics with one or more thermoplastic layers, molded thermoplastics with one or more thermoplastic portions. Preferably the housings have a thermoplastic on a portion of the wall of the housing or sleeve in contact with the potting material that is capable of fusing with the potting material during a bonding process. The housing or sleeve may have a smooth surface or it may have one or more structures formed on its inner surface to bond with the potting resin.

A fluid-fluid phase contactor or exchange device of the present invention may be made from thermoplastic polymeric materials and preferably perfluorinated thermoplastic polymers. The device can be used for contacting a fluid to be conditioned with a working or exchange fluid. The contactor or exchange device includes a bundle of a plurality of perfluorinated thermoplastic hollow fiber membranes or hollow tubes 130 as for example shown in FIG. 1A. These hollow tubes may be porous or non-porous, and each have a first end 110 and a second end 122. The membranes and tubes have an inner surface 109 and an outer surface 111. For hollow membranes and hollow tubes the inner surface comprises a lumen or bore. The hollow conduits may be selected from non-porous hollow tubes; hollow fiber membranes having a porous skinned inner surface, a porous outer surface, and a porous support structure between them; hollow fiber membranes having a non-porous skinned inner surface, a porous outer surface, and a porous support structure between them; hollow fiber membranes having a porous skinned outer surface, a porous inner surface, and a porous support structure between, and hollow fiber membranes having a non-porous skinned outer surface, a porous inner surface, and a porous support structure between. Each end of the bundle of conduits or membranes can be potted with a liquid tight perfluorinated thermoplastic seal to form a unitary end structure with a surrounding perfluorinated thermoplastic housing wherein the fiber ends are open to fluid flow as shown by 110 and 122 in FIG. 1A. In one embodiment, the housing 124 has an inner wall with channels or grooves 104 and 116, a portion of which are filled with the thermoplastic potting resin, and an outer wall. The housing inner wall defines a fluid volume between the inner housing wall and the outside 111 of the hollow tubes or the hollow fiber membranes. The housing may have a first fluid inlet 102 to supply a first fluid to the first end 110 of the bundle to be contacted with a second fluid which may be supplied at housing inlet 112. The housing may have a first fluid outlet 118 connection to remove the contacted first fluid from the second or outlet end 122 of the hollow tubes 130. The housing fluid inlet connection 112 can be used to supply a second fluid to be contacted with first fluid through the walls of the hollow fibers or tubes. The second fluid occupies the volume formed between the inner wall of the housing 124 and the hollow fiber membranes or tubes 130. The housing may include a second outlet 134 connection to remove the contacted second fluid.

A method of making a fluid-fluid phase contactor substantially made from thermoplastic polymers and preferably perfluorinated thermoplastic polymers for contacting a first fluid with a second fluid may include forming a bundle of a plurality of perfluorinated thermoplastic hollow conduits such as hollow fiber membranes, hollow tubes, or a combination of these having a first end and a second end. The hollow conduits have an outer surface and an inner surface, the inner membrane surface comprising a lumen or bore. The hollow fiber membranes that can be used in the device and the method of making it may be selected from the group consisting of hollow fiber membranes having a porous skinned inner surface, a porous outer surface, and a porous support structure between them; hollow fiber membranes having a non-porous skinned inner surface, a porous outer surface, and a porous support structure between them; hollow fiber membranes having a porous skinned outer surface, a porous inner surface, and a porous support structure between them; and hollow fiber membranes having a non-porous skinned outer surface, a porous inner surface, and a porous support structure between. As illustrated in FIG. 11, the hollow conduits 1106 are positioned and surrounded by an end of a perfluorinated thermoplastic housing or a perfluorinated thermoplastic sleeve 1102 having an inner wall with channels or grooves 1112 and an outer wall 1104. The hollow conduits 1106 are potted at each end of the bundle positioned in the housing, or each end of the bundle potted to a different housing sleeve (structure illustrated in FIG. 1C), using a perfluorinated thermoplastic 1108 to form a liquid tight perfluorinated thermoplastic seal with the ends of the hollow conduits and to form a unitary end structure with the surrounding perfluorinated thermoplastic housing including bonding to one or more of the channels or grooves 1112 and 1116 with the thermoplastic resin. Preferably after potting, the ends of the hollow conduits are opened at both ends of the housing or ends of separate sleeves(structure illustrated in FIG. 1C) to provide fluid flow through the hollow conduits. The method may further include the acts of modifying housing or one or more sleeves of the device to provide one or more bonded endcaps, conduits, or one or more fluid fittings. Alternatively, the device may be bonded or welded directly into fluid flow circuit or a vessel. The device may be used as an immersion device or in-line in a fluid flow circuit. In a non-limiting example, the housing 124 of FIG. 1A may have a first endcap 136 with fluid inlet 102 bonded to housing end 132 to supply a first fluid to the first end 110 of the bundle to be contacted with a second fluid which may be supplied at inlet 112. The housing may have a second endcap 120 with fluid outlet connection 118 bonded to the housing end 121 to remove the contacted first fluid from the second or outlet end 122 of the hollow conduits 130. A housing fluid inlet connection 112, can be bonded to the housing 124 and used to supply a second fluid to be contacted with said first fluid through the walls of the hollow conduits 130. The second fluid occupies the volume formed between the inner wall of the housing 124 and the hollow conduits 130. The housing may include a second outlet 134 connection bonded to the housing 124 to remove the contacted second fluid.

Potting and bonding of hollow conduit cords, hollow fibers or hollow tubes, into the housing can be done in a single step using for example a thermoplastic resin potting material such as but not limited to Hyflon® MFA 940 AX resin, available from Ausimont USA Inc. Thorofare, NJ. The devices can be made by vertically placing a portion of a bundle hollow tube and or hollow fiber cord lengths with at least one closed end, prepared for example by wrapping the hollow tube or hollow fiber on a frame and annealing, into a pot lifted off the bottom surface of the pot by approximately 1/8-¼ inch (0.318 to 0.635 cm). Thermoplastic resin in pellet form can be placed around the outside of the shell of the device, and the pot can be heated to melt the resin. The temperature can be from about 280-305 °C for the co-extruded hollow tubes. The resin melts and flows into the shell and between the lumens by head pressure and capillary action. An alternative method is to make a temporary recess made in a pool of molten thermoplastic polymer held in a container. The hollow conduits are held in a defined vertical position, maintaining the thermoplastic polymer in a molten state so that it flows into the temporary recess, around the hollow conduits and vertically up the hollow conduits, filling the interstitial spaces between the hollow conduits and one or more structures like grooves in the housing or sleeve walls. A temporary recess is a recess that remains as a recess in the molten potting material for a time sufficient to position and fix the bundle of hollow conduits in place and then will be filled by the molten thermoplastic. The temporary nature of the recess can be controlled by the temperature at which the potting material is held, the temperature at which the potting material is held during hollow conduit bundle placement, and the physical properties of the potting material. The end of the hollow conduits can be closed by sealing, plugging, or in a preferred embodiment, by being formed in a loop.

While co-extruded hollow conduits, hollow tubes, and hollow fiber having one or more layers of thermoplastic as illustrated in FIG. 12A and shown FIG. 12C may be potted using the method described *vide supra,* they may also be fused together and to a sleeve or housing by placing a plurality of these hollow conduits in contact with each other an approximately parallel relationship in a housing or sleeve. A heated fluid can be introduced into the interiors of the ends of these co-extruded hollow conduits to fuse the lower melting outer thermoplastic layer of the conduits together and to the housing wall to form an integrally bonded fluid tight arrangement of the hollow conduits in the sleeve. The housing or sleeve, optionally having structures like groove and protrusions on its surface, may have a layer of a thermoplastic fused to its inner surface or molded to its inner surface that can bond with the hollow conduits. Alternatively, the fused tubes bonded together in a first step can be potted with a thermoplastic resin in the housing.

Another method for potting hollow tubes includes fusing a portion of a plurality of thermoplastic hollow tubes or fibers in a housing end or sleeve into a thermoplastic potting resin to form a unitary end structure of the potting resin, hollow tubes, and housing. The interior of the housing or sleeve can have one or more fusible protrusions, one or more channels or grooves in its surface. Alternatively, an inner layer of a co-extruded housing can have a layer of thermoplastic that can fuse to the potting resin. The process may involve, as illustrated in FIG. 11, placing the assembly (housing 1102, hollow tubes 1106, and resin 1108) in a heating cup 1136 and heating the potting resins 1108 in the heating cup 1136 with an external heating block or other heat source until the resin 1108, hollow tubes 1106, and housing 1102 are able to fuse together without loss of the structure of the hollow tubes 1106. For perfluorinated thermoplastic materials, like FEP, PFA, and MFA this can be a temperature in the range of from about 265 °C to around 305 °C, with a preferred range of from about 280 °C to around 305 °C, until the melt turns clear and is free of trapped bubbles. During heating, the resin melt flows up and between the fibers and in the shell until the height is equivalent or nearly equivalent on the inside of the shell as the outside of the shell. Alternatively, a rod is inserted into the melt to create a recess or cavity. The housing 1106 with the grooves or channels 1112 and 1116 and the hollow tube bundle 1106 are then inserted into the cavity. At this point neither the hollow tube bundle nor the housing touches the potting resin. The melted resin 1108 will flow by gravity to fill the voids and channels in the housing over time to pot the hollow tubes and bond to the housing simultaneously. After cooling the potting process may be repeated for the opposite end of the housing (not shown) or another sleeve. After the potted ends are cooled, they can then be cut and the lumen of the hollow tubes exposed. The potted ends may be milled by a machine and bit to open the tube hollows and to form a recessed potted region 725 away from the end portion 727 of the housing or sleeve as illustrated in FIG. 7C. The hollow tubes 130 form a fluid tight seal 108 and 126 with the potting resin 106 and 114 respectively. The potted surfaces may be polished further using a heat gun to melt away any smeared or rough potted surfaces. For module with a large number of hollow tubes, such as 2000 or more, it is possible that the module may have potting defects which can be repaired using a clean soldering iron to fuse and close the damaged areas, or by melting new resin into the defect with the aid of the soldering iron.

FIG. 1A illustrates an exchange device having a housing or sleeve with one or more grooves in the housing wall and where the housing encloses the hollow tubes. The exchange device can have a fluid inlet fitting 102 that is part of an endcap 136 that can be bonded, threaded, welded, or connected by other suitable means to the housing or sleeve 124. The housing 124 has one or more channels or grooves , for example 104 and 116 (other grooves not shown for clarity), in the housing or sleeve. The thermoplastic resin, for example 106 and 114, from the potting, the hollow tubes, or a combination of both, bonds one or more hollow tubes 130 to the grooves 104 and 116 of the housing. As illustrated at 108 and 126 the resin 106 and 114 bonds with the hollow tubes 130 and form a fluid tight seal with the housing grooves 104 and 116. Each hollow tube includes an inlet 110 and an outlet 122 bonded to the housing or sleeve 124. The housing may optionally include fluid fittings 112 and 134 that can be but are not limited to those that are bonded, threaded, molded, or a combination of these with the housing 124. The exchange device can have a fluid outlet fitting 118 that is part of an endcap 120 that can be bonded, threaded, welded, or connected by other suitable methods to the housing or sleeve 124. Hollow tubes 130 can be potted in thermoplastic resin to form a unitary end structure and the tube ends cut to open the lumen of the hollow tubes even with the housing end 132. Alternatively the potting resin and hollow tubes can be machined to sever and open the tubes and remove material from the end of the housing or sleeve end 132 back to a position 128, and 121 back to a position 117 This removal opens the tubes in the unitary end structure and facilitates thermal bonding of endcaps to the housing or sleeve 124. The hollow tubes 130 can be but are not limited to porous hollow fibers, skinned hollow fibers, non-porous hollow tubes, co-extruded hollow tubes or any combination of these, preferably the tubes are thermoplastic or include a thermoplastic material.

FIGURE 1B illustrates an immersion type exchange device having a housing enclosing the end portions of the hollow conduits 166. The device may have an endcap 168 mounted to a housing or sleeve 148 having one or more channels or grooves 142 in the wall of the housing or sleeve 148. The endcap can have a fluid inlet fitting 140 that may be molded, fusion bonded, threaded or otherwise mounted to the endcap to provide a fluid inlet. Preferably the housing 148 is or includes a thermoplastic material that can be bonded to one or more hollow conduits 166 and bonded to thermoplastic resin 164 in the one or more channels 142. The hollow conduits 166 and thermoplastic resin form a fluid tight bond or seal 146. Each hollow conduit includes an inlet 138 and an outlet 139 bonded to the housing or sleeve 148 and 158. The device may have an endcap 156 mounted to a housing or sleeve 158 having one or more channels or grooves 150 in the housing or sleeve. The endcap 156 can have a fluid outlet fitting 154 that may be molded, fusion bonded, threaded or otherwise mounted to the endcap 156 to provide a fluid outlet. Preferably the housing 158 is or includes a thermoplastic material that can be bonded to one or more hollow tubes 166 and bonded to thermoplastic resin 152 in the one or more channels 150. The one or more hollow conduits 166 and thermoplastic resin 152 form fluid tight bond or seal 162. The hollow conduits 166 are co-extruded hollow tubes that can be potted with resin to form a fluid tight seal. Preferably the hollow tubes are thermoplastic or contain a thermoplastic material. In FIG. 1B, the hollow tubes 166 are illustrated as having an inner layer 144 (solid line) and an outer layer 160 (indicated by dashed line, see also FIG. 7C and FIG. 12 A-D). For example the inner layer 144 may represent a thermoplastic such as PFA while the outer thermoplastic layer 160 may be a thermoplastic like MFA that can fuse with an MFA potting resin, or FEP that is thermally bonded to inner hollow tube layer 144. The outer layer of the co-extruded tube may only coat those portions of the hollow tubes that are potted in the resin (not shown), or it may coat the outsides of the hollow tubes as illustrated. The hollow tubes 166 may be one more co-extruded thermoplastic tubes, preferably perfluorinated thermoplastic, but can also be but is not limited to porous or skinned thermoplastic hollow fibers, or thermoplastic coated metals or ceramic tubular materials.

FIGURE 1C illustrates an exchange device that has a sleeve or housing 186 that encloses a portion of the hollow conduits which may be hollow tubes or hollow fibers. Fluid may be inlet to the device at 170 and outlet from the device at 184. A fluid inlet fitting or conduit may be connected to the housing 186 (see FIG. 1A), or the device can be welded into a fluid handling manifold at inlet end 173 and outlet end 181. The housing 186 includes one or more channels or grooves 174 and 182 that bond to the thermoplastic resin 172 or 180. The housing may be provided with one or more fluid inlet 178 and fluid outlet 196 connectors bonded, molded, threaded or otherwise connected to the housing186. The thermoplastic resin 172 and 180 bonded to the channels 174 and 182 in the housing 186 also bonds to one or more hollow tubes 192 including but not limited to porous hollow fibers, non-porous hollow tubes, co-extruded tubes or any combination of these. Each hollow tube includes an inlet 190 and an outlet 194 bonded to the housing or sleeve 186. The hollow tubes are shown bonded to the resin, for example at 176 and 188. As shown for illustrative purposes only, the tubing ends and potting resin may be cut back inside the ends of the housing. Resin 172 and hollow conduits 192 may be removed by machining back to 175 and resin 180 and hollow conduits 192 machined back to 183 to open the conduit ends. The recessed ends can help with subsequent bonding or welding of encaps to the housing ends 173 and 181.

FIGURE 2A illustrates in cross section a non-limiting example of channels or grooves in a portion of a housing, endcap, or sleeve that is used to bond with hollow conduits. Such grooves include but are not limited to rectangular grooves (B), trapazoid shaped groove (A), and combinations of these or other shapes. The width of the grooves, their depth, their spacing from one another, and their spacing from the end of the housing may be varied without limitation. FIG. 2A shows the cross section of a portion of a cylindrical sleeve with trapazoidally shaped grooves 204 on the inner portion of the tube. These grooves can be milled or formed into the wall of the housing 202 to a depth 208 from inner housing surface 210 and a distance 212 from the outer surface 216 of the housing or sleeve. FIGURE 2B illustrates rectangular grooves or channels like groove 242. The grooves in the housing may be formed a distance 224 from the housing or sleeve end 230. The housing end 230 can be bonded to an endcap or welded to a fluid conduit. The grooves can be characterized by an opening illustrated by the distance between 232 and 236. The grooves may be equally spaced, for example 244 and 246 or 246 and 250, or the grooves may be unequally space apart as illustrated by the larger distance between grooves 242 and 244. The groove may have a depth 220 from the inner surface 238 of the housing (grooves may be on the outer surface 240, not shown).

FIGURE 3 illustrates the end portion of an exchange device housing, sleeve, or endcap in cross section with one or more shaped channels or grooves 304 in a housing, endcap, or sleeve where different types of tubes are bonded or potted. Grooves or channels 304, which are illustrated as open trapezoids, can be any shape that can be formed in a housing or sleeve wall 314. The sleeve wall has an inner surface 316 and outer surface 308. The inner surface 316 may include a thermoplastic layer (not shown) that is capable of fusing with the thermoplastic resin and one or more hollow conduits. The surface of the one or more channels 304 is bonded to the thermoplastic resin 310 along with one or more hollow tubes 318 and 320 in the housing 314. The thickness of the housing, sleeve, or endcap, the distance between 308 and 316, can be chosen to meet the pressure and temperature safety ratings of exchange device for its intended use. In FIG. 3, 318 illustrate hollow conduits that can be hollow tubes, porous or skinned hollow fibers, co-extruded hollow tubes, or any combination of these potted in resin 310 to form a fluid tight seal. In FIG. 3, 320 is an illustration of a co-extruded hollow tube bonded to the housing 314 with thermoplastic resin 310; 330 illustrates resin bonding adjacent tube together. The hollow tube 320 has an inner portion or layer with surface 322 and an outer portion or thermoplastic layer 326. The outer layer and inner layer can both be thermoplastic materials, preferably the outer layer 326 is a thermoplastic capable of fusing with the thermoplastic resin and more preferably has a lower melting point temperature than the inner layer 322. The thermoplastics for one or more of the layers of the co-extruded hollow conduits are preferably perfluorinated thermoplastics.

The exchange device may have a process fluid inlet and outlet connected to the housing for receiving and delivering a process fluid into a re-circulation loop or to a dispense tool. The exchange device can have an exchange fluid or working fluid inlet and outlet fittings for flow of an exchange fluid; the exchange fluid separated from the treated fluid or process fluid by the material in the walls of the hollow tubes and the potting bonding the housing to the tubes. The exchange fluid exchanges or transfers mass and or energy to or from the process fluid through the hollow tube walls. The exchange device of the present invention may be used in an apparatus that optionally includes a re-circulating pump in fluid communication with the process fluid inlet on the exchange device and optionally a tank for holding an article to be treated by the process fluid. The exchange device may be used as part of a dispense system or a re-circulating fluid flow circuit. The apparatus may also further include a particle filter. The apparatus may exchange mass and or energy with gases, organic containing fluids, or aqueous fluids including ultra high purity water. Preferably the substrate or article to be treated by the process fluid includes but is not limited to metals such as copper and aluminum, semiconductors including arsenic or silicon, or ceramics including aluminum, barium, and strontium.

FIGURE 4 illustrates an apparatus that includes an exchange device of the present invention for conditioning a fluid used to clean or coat substrates. The apparatus may include fluid conduits, pumps, valves, sensors, and particle filters. For example, an exchange fluid 450 may be directed through an exchange device 416 of the present invention by pump 446, through an optional adjustable valve 412 and optional particle filter 408 and returned by conduit 404 to a holding tank 448. Process fluid 428 for cleaning or coating the substrates 434, for example a sulfuric acid and hydrogen peroxide solution, can be pumped by fluid pump 438 through adjustable valve 442 an into exchange device 416 where energy exchange occurs between fluid 450 and process fluid 428 through the walls of the hollow tubes in the exchanger. Conditioned fluid exits the exchange device 416 through optional adjustable valve 420 and optional particle filter 424 and enters the process tank or weir 444. The process tank 444 can include a drain valve 432 to remove spent process fluid from the tank 444.

An apparatus or system for treating substrates may utilize one or more exchange devices as illustrated in FIG. 5. The exchange devices 516 and 544 may be configured for immersion (not shown), co-current flow, or counter current flow. The process bath or cleaning bath fluid 526 is treated by the exchange device 516 of the present invention by contact through hollow tubes in the exchange device 516 with an exchange fluid 560 which is illustrated as being stored in a tank 556. The exchange fluid 560 may temperature conditioned using a closed loop chiller, resistive immersion heaters, a source of house/facilities hot or chilled water. Alternatively the fluid may be a chemical that is generated and fed into the exchange device for mass transfer to the process fluid. The temperature and or chemically conditioned fluid may be stored in the tank or feed directly to the exchange device. In FIG. 5, 504 is an exchange fluid pump that can be used to direct the exchange fluid through an optional particle filter 508 and optional adjustable valve 512 to the exchanger device 516. The exchange fluid flows through the exchange device 516 and can be returned to the tank 556 through valve 564 and conduit 554. Optionally the exchange fluid is supplied from a facility source to exchange device 516 and disposed of directly through conduit 554 to a drain (not shown). Process fluid 526 from the tank 550 can be directed by pump 548 through adjustable valve 552 through the exchange device 516 where it exchange energy, mass, or a combination of these with the exchange fluid 560. The conditioned process fluid is removed from the exchange device through optional valve 518 and optional particle filter 522 and is returned to the process tank 550 for treating the substrates 524. Waste process fluid 526 may be disposed of through valve 540 to remove energy and or hazardous chemicals through exchange device 544 and direct it to a waste treatment or disposal drum through valve 532. The waste process fluid can be treated by exchange of mass, energy, or a combination of these with a second working fluid provided through valves 528 and 536 into the exchange device 544.

The exchange devices can also be used in a method and apparatus for the purification of gases which may be used in chemical processes or which may be removed from an effluent stream. In particular, the present invention provides a device which maintains the integrity of the potting resin and housing seal during exothermic scrubbing reactions where for example an exhaust fluid is purified by reacting a component of the exhaust fluid with a reactive liquid, gel, or slurry contained on one side of a porous hollow fiber membrane potted into a housing having grooves, the potting and hollow conduits forming a unitary end structure with the housing that can be cut open for fluid flow through the potted hollow conduits.

An exchange device of the present invention may be used for cleaning or coating of moving substrates. For example, FIG. 6 illustrates the coating or cleaning of a rotating substrate 636 with fluid from source 632 treated or conditioned by transfer of mass, energy, or a combination of these by the exchange device 618. An exchange or working fluid 650 from a tank 646 (or house facility source not shown) can be made to flow through the exchange device 618 using a pump 642. The exchange fluid 650 interacts with the process fluid 632 through the hollow tubes in the exchange device 618 and can be returned to the tank through valve 614, optional particle filter 610 and conduit 604. Temperature conditioning or chemical modification of the fluid 650 may be performed by additional devices (not shown) including heaters, chillers, chemical generators (hydrogen or ozone) and controllers. Fluid from source 632 can be delivered to the exchange device 618 using a pressure source 628 or pump 638. The fluid may be treated by an optional particle filter 622 installed upstream or downstream of the exchange device. Valve 622 and 640 can be adjustable valves and can be used to control flow and isolate the exchange device. Process fluid 632 enters the exchange device and transfers mass, energy, or a combination of these with the working fluid 650 through the hollow tube walls. The conditioned process fluid may be dispensed to a rotating or translating substrate using pump 632, which can be a dispense pump, dispense conduit or nozzle 630.

An example of a housing, sleeve, or portion of an endcap with one or more channels in the inner or outer wall of the housing is illustrated in FIG. 7(A). In FIG. 7A, a housing shell or sleeve with venting slots 716 interconnecting the grooves or channels 720 are illustrated on inner surface of the sleeve 726. FIG. 7B illustrates in cross section venting slots 716 interconnecting grooves 720. The venting slots can allow for gases like air to escape from the resin during potting. The housing can be a tube or sleeve that encloses a portion of one or more hollow tubes and may be pretreated by fusing a coating of a powdered thermoplastic, coextruding, or molding a thermoplastic to the inner wall, the thermoplastic can be but is not limited to MFA onto the sleeve illustrated by 936 in FIG. 9. The housing may be but is not limited to cylindrical tubes, conduits having any number of sides including hexagonal, rectangular or triangular conduits. The housing or sleeve may be a thermoplastic material or may be a ceramic or metallic tube coated with a thermoplastic material. The thermoplastic material can be a fluorpolymer. In preferred embodiment, the housing or sleeve includes one or more channels in the inner or outer wall that can be bonded to the hollow tubes.

FIGURE 7C illustrates in cross section an end portion of the sleeve 726 shown in FIG. 7A and FIG. 7B. FIG. 7C illustrates one or more hollow conduits, and in particular co-extruded hollow tubes 708 potted with a thermoplastic resin 722 in a thermoplastic or thermoplastic coated housing or sleeve 726 having one or more grooves 738, 740, 742, and 744 in the housing wall. The co-extruded hollow tubes have an inner layer 704 and one or more outer layers 706 (additional layers not shown for clarity). During potting, the outer layer 706 of the co-extruded tube fuses, mixes, or combines with the resin to bond the hollow tubes to the resin 722 and the housing 726. In FIG. 7C, 710 illustrates the outer layer of the co-extruded tube and the potting resin forming an arbitrarily defined interface separating the un-fused outer tubing layer 706 from fused resin bonded to the hollow tubes 708 and housing 726. One or more venting grooves or slots 712 for inner groove 738, and venting slots 716 may be formed in the housing for venting gas from the grooves 740, 742, and 744 during potting. The surfaces of these slots 716 may bond with the thermoplastic resin 722. During potting one or more of the grooves 738, 740, 742, or 744 in the housing bond with the potting resin. The number and extent that the grooves are filled with resin may be varied by changing the amount of thermoplastic resin in the pot and the placement of the housing in the pot. A sufficient number of grooves are bonded to the resin to provide strength and integrity for the intended use of the exchange device and for bonding the hollow tubes 708 to the resin 722 and to housing 726. This can be determined using the test apparatus of FIG. 8 and expected application use conditions. As shown in FIG. 1A-C, each hollow tube 708 has an inlet, illustrated being connected to 734, and outlet 724 for fluid flow. The inner layer portion of the co-extruded tubing where outer layer 706 is still present is shown by 728. The inner layer portion of the co-extruded tubing where the outer layer has fused to the resin 722 is illustrated by 736. The potting of the hollow tubes creates regions 732 between the hollow tubes above the potting resin 722 for fluid flow contact with the outer layer of the co-extruded tubes 708. Preferably the grooves are arranged so that their height decreases from the groove nearest the outlet of the sleeve or housing 744 to the groove nearest to the interior of the sleeve or housing 738. The wall between adjacent grooves may be any shape. As shown in FIG. 7C for illustrative purposes only, the grooves are separated by three trapezoid shaped walls, the heights of the walls between grooves decreasing from 742 to 738. The unitary end structure formed during the potting process may be recessed from the end 727 of the housing or sleeve 726 to form a recessed surface 725. The end surface 727 of the housing or sleeve can be bonded to endcaps, fluid fittings, or welded into a fluid conduit.

FIGURE 7D illustrates an end portion of an exchange device in cross section where one or more co-extruded tubes 758 are bonded to each other by fused resin 786 by from a portion of the thermoplastic resin layer 756 on adjacent hollow tubes 758. The fused hollow tube may be bonded to the thermoplastic or thermoplastic coated housing or sleeve 770 (similar to 726) having one or more grooves 788, 790, 792, or 794 by fusion of the housing with the resin layer 756 on the thermoplastic hollow tubes or by addition of a resin to form a thermoplastic 776 that bonds one or more hollow tubes to the housing 770 and one or more grooves 788, 790, 792, or 794. The co-extruded hollow tubes have an inner layer 754 and one or more outer layers 756 (additional layers not shown for clarity). During bonding, the outer layer 756 of the co-extruded tube fuses, mixes, or combines with the outer layer resin from adjacent tubes to bond the hollow tubes together 786 and the optionally the housing 776; additional thermoplastic resin may be used to bond one or more hollow tubes to the housing 776. In FIG. 7D, 760 illustrates the region where the outer layer of the bonded co-extruded tube forms an arbitrarily defined interface separating the intact outer layer of the co-extruded tube 756 and portion of co-extruded tubing where outer layer mixes with resin 786 or 776. One or more grooves or vent slots 766 may be formed in the wall along an axis of the housing for venting gas from the one or more concentrically formed grooves 788, 790, 792, or 794 during bonding or potting. These grooves or vent slots 766 may have the same or a different depth, size or shape than the grooves 788, 790, 792, or 794. During potting these channels can bond to the thermoplastic resin. During bonding or potting one or more of the grooves 788, 790, 792, or 794 in the housing can be filled with the potting resin as shown. The number and extent that the grooves are filled with resin may be varied by changing the amount of thermoplastic resin in the pot and the placement of the housing in the pot. A sufficient number of grooves 788, 790, 792, or 794 are bonded to the resin 776 to provide strength and integrity for the intended use of the exchange device and for bonding the hollow tubes 758 to housing 770. As shown each hollow tube 758 has an inlet, illustrated connected to 798, and outlet 796 for fluid flow. The portion of the co-extruded tubing where the outer layer 756 is still present is shown by 778, the portion of the co-extruded tubing where the outer layer has bonded to adjacent hollow conduits or thermoplastic resin is illustrated by 784. The un-fused regions of the hollow tubes creates spaces 782 between the hollow tubes for fluid flow contact with the outer layer of the co-extruded tubes. Preferably the grooves 788, 790, 792, or 794 are arranged so that their height decreases from the groove nearest the outlet of the sleeve or housing 794 to the groove nearest to the interior of the sleeve or housing 788. The wall between adjacent groove may be any shape. As shown in FIG. 7D, for illustrative purposes only, the groove walls are in the shape of trapezoids.

A test apparatus for measuring the integrity or performance of an exchange device may include an exchange device, sensors, one or more test fluids, and fluid handling devices such as pumps, conduits, and valves. FIG. 8 illustrates a non-limiting example of a test manifold that includes an exchange device 804 having one or more hollow tubes bonded to a housing or sleeve having one or more grooves. The hollow tube exchange device 804 under test, or any portion of the manifold, may be insulated or placed in a temperature controlled enclosure (not shown). The manifold can include a shell fluid outlet 806 fluidly connected to an optional sensor 808 which can be but is not limited to a pressure gauge, temperature probe, concentration monitor, mass analyzer, flow meter, or a combination of these. The fluid outlet and sensor may be fluidly connected to a valve, preferably an adjustable valve 812, that is fluidly connected to the exchange device outlet 816. The exchange device outlet 816 is in fluid communication with fluid in the hollow lumens of the tubes that make up the exchange device. The fluid from the outlet 816 exchanges mass, energy or a combination of these with the fluid from source 834 through the hollow tubes of the exchange device. The change in state of fluid from inlet 842 as measured by sensor 850 from 854 and the state of the fluid at outlet 816 (mass, energy, chemical composition) as measured by sensor 808 may be used to characterize the performance or integrity of the exchange device 804. Alternatively, the integrity of the exchange device may be determined by examining either the hollow tubes at 842 or 816 for fluid 834 after a period of time under test conditions of for example pressure, temperature, or chemical composition. For a non-porous hollow tube, an amount of fluid 834 above that expected due to diffusion or permeation of the material through the tube walls is an indication of loss of integrity of the exchange device 804. An adjustable valve 820 can be placed in fluid communication with the outside or shell side of the hollow tubes. The valve 820 can be in fluid communication with a sensor 822 that can be but is not limited to a pressure gauge, temperature probe, concentration monitor, mass analyzer, spectrophotometer, flow meter, particle counter, or a combination of these. A fluid conditioning device 826 may be fluidly connected to the exchange device. The fluid conditioning device can be a chiller, heater, a gas generator with temperature monitoring and control (not shown) or other device for conditioning a fluid 834. For liquids, a chemically compatible pump 828 and or flow meter can be used to deliver fluid at a know rate to the shell side of the hollow tubes of the exchange device. Alternatively the exchange device can be connected to a pressurized source of fluid without flow and the temperature of the device modified during a test. An optional sensor 832 can be fluidly connected to the test fluid source 834, fluid source 834 can be an overflow tank. The outlet of the shell side of the exchange device 804 may have an adjustable valve 838 to control fluid flow through the shell side of the device. An inlet 842 to the hollow tube lumens of the exchange device 804 may be connected to an adjustable inlet valve 846. The inlet valve 846 may be connected to a sensor 850 that measures the state of a test fluid inlet to the exchange device 804 through inlet 854 from a source (not shown). The sensor 850 may be used to compare the inlet state of the fluid to that measured by the outlet state measured by sensor 808 and can be used with fluid flow rate and packing density of the hollow tubes in the exchange device to determine the efficiency or transfer capability of the exchange device.

The wall of a sleeve or housing with grooves and vent slots from FIG. 7B is shown in greater detail in FIG. 9. The one or more grooves 904, which can be paralle, are shown formed on the inside wall of the sleeve having depth 916 in the wall as determined between inner surface 920 and the bottom of the grooves 914. The grooves or vent slots between grooves illustrated by 912 along an axis of the housing interconnect adjacent grooves, provide a bonding surface, and permit venting of gases from the thermoplastic resin during fusion bonding or potting. The wall 908 of the housing, sleeve, or endcap has a thickness 928 defined between inner wall 920 and outer wall 924. The end of the housing, sleeve, or endcap 932 may be welded, fused, or bonded to other fluid handling devices, conduits, or vessels as shown for example in FIG. 1A The inner wall surface, groove surface, or both may be pretreated with thermoplastic powder 936, shown as a broken white line, that bonds to thermoplastic resin.

The wall of a sleeve or housing with grooves and vent slots similar to FIG. 9 but with a tapered portion of the inner wall is illustrated in FIG. 10. The one or more grooves 1004 are shown formed on the inside wall of the sleeve having depth 1020 in the wall 1008. The grooves or vent slots 1012 interconnect grooves1004. The slots permit venting of gases from the thermoplastic resin during fusion bonding. Optional grooves 1014 may be provided for venting from the inner most groove 1006. The inner wall 1016 of the housing, sleeve, or endcap may be tapered, and the heights of the groove walls 1028, 1032, and 1036 between grooves and shown as rectangles also tapered. The height of the rectangular walls between adjacent grooves is approximated as the distance between groove bottom 1020 and line 1040. The taper shown gives groove wall heights with 1036 >, 1032 > 1028. The end of the housing, sleeve, or endcap 1032 may be welded, fused, or bonded to other fluid handling devices, conduits, or vessels as shown for example in FIG. 1A. The inner wall surface, groove surface, or both may be pretreated with thermoplastic powder (not shown for clarity). The outer wall surface 1044 may have one or more grooves formed or machined into its surface and into the wall 1008 (not shown).

The potting of one or more hollow conduits 1106 into a housing having one or more grooves 1112 and 1116 and grooves or vent slots 1132 fluidly interconnecting the adjacent grooves is illustrated in FIG. 11. In FIG. 11, 1102 can be housing, sleeve, or endcap with grooves 1112 and slots 1132 that hollow conduits 1106 can be potted with a thermoplastic resin illustrated as a melt by 1108. In FIG. 11, a gas bubble in the resin 1120 is illustrated as rising through the vent slot between grooves 1116 and 1112. During potting to form a unitary end seal the hollow conduits 1126, closed by frame wrapping the hollow conduits (other conduits like 1122 are also wrapped with the loop directed into the plane of the page), are fused to the potting resin 1108, the housing, and to each other by the heated pot 1136. The hollow conduit ends may be opened by cutting the potting resin and conduit ends after cooling the melt to form the unitary end structure.

FIG. 12 (A) is an illustration of the cross section of a hollow conduit that is a co-extruded hollow tube that is used in the exchange devices in versions of the present invention. The hollow tube can be but is not limited to a circular cross section, the shape of the tube can be modified to be rectangular, a polygon, or an ellipsoid. The tube has a thermoplastic outer layer 1204 with a thickness shown between 1208 and 1212 and an overall outside dimension or diameter 1216. The outer layer 1204 can have a melting point that allows it to fuse with the potting resin but resists change or collapse of the inner conduit layer 1228. The thickness and uniformity of the layer may vary over the length of the tube, however the variation permits fusion of the tubes to one another or to a potting resin. This outer layer may include additives to modify the exchange properties of the hollow tube. For example, thermally conductive material such as carbon can be added to the outer layer 1204. The hollow tube has an inner layer 1228 fused or bonded to the outer layer with a thickness that can be measured between 1224 and 1220 and inside diameter 1210. FIG. 12B is a partial image of the cross section of a hollow co-extruded perfluorinated thermoplastic tube shown in FIG. 12C. In FIG. 12B, the outer layer 1232 can be a perfluorinated thermoplastic like MFA or FEP that appears as a darker layer 1232 thermally bonded to the inner layer 1234 that can be a higher melting perfluorinated thermoplastic like PFA. FIG. 12C illustrates the variation which may occur in the thickness and uniformity of the outer layer. An image of a portion of an exchange device prepared using co-extruded tubes 1238 potted in a thermoplastic resin 1236 in a thermoplastic sleeve or housing 1240 is shown in FIG. 12D.

FIG. 13A is the partial cross sectional image of a cylindrical thermoplastic housing with wall 1304 and thermoplastic hollow tubes that were potted in a sleeve without grooves at a temperature that resulted in collapse of the thermoplastic tubes and complete fusion of the with the thermoplastic resin 1308. Hollow conduit collapse during bonding and poting can also occur when variations in tube wall thickness or composition cause variation in the melting temperature of the hollow conduits. FIG. 13C is a full cross sectional view of FIG. 13A. FIG 13B is a partial cross sectional image of FIG. 13D. FIG. 13D shows one or more opened thermoplastic co-extruded hollow conduits 1322, the hollow conduits have an MFA outer layer and a PFA inner layer, potted into a sleeve without grooves. FIG. 13D illustrates that the outer MFA layer of the hollow conduit has fused with the MFA resin 1318 without collapse of the inner PFA conduit. These potted hollow conduits 1322 were cut open to give open hollow tubes bonded in a thermoplastic sleeve or housing 1314 under the same potting conditions used for FIG. 13C. The higher melting temperature of the inner layer of the hollow conduit may be used to retain the shape of the hollow conduit and prevent collapse due to variations in process conditions, material tolerance, and material composition.

FIG. 14 is an illustration of an exchange device having a housing 1416 enclosing one or more hollow conduits 1422 that are bonded to a thermoplastic resin 1440 with one or more grooves 1404 and 1412 in the housing wall. The housing can include a shell side fluid inlet 1408 and fluid outlet 1426 formed, bonded, threaded, or otherwise fluidly connected to the housing 1416. One or more of the hollow conduits can include resistive wires or filaments 1402 that may be connected to an electrical circuit at ends represented by 1406 and 1410. The electrical circuit including a power supply and controller (not shown). The wires 1402 in the hollow conduits 1422 may be resistively heated by the power supply and controller whereby thermal energy is exchanged with a fluid 1432 inlet to the device at 1408. The fluid 1432 is heated by the hollow conduit enclosed resistive wires 1402, and can be removed from the exchange device as heated fluid 1436 at housing fluid outlet 1426.

The exchange device may include but is not limited to one or more potted hollow conduits that can be porous hollow fibers, skinned hollow fibers, thermoplastic tubes, or combinations of these bonded to a thermoplastic housing or sleeve. The exchange device of the present invention can be made with a variety of hollow conduits having variously shaped inner and outer surfaces including but not limited hollow tubes, rectangular conduits, triangular conduits. The hollow conduits generally have an outer surface and can have one more channels along the inside of conduit. The porosity of the hollow conduits walls can vary from non-porous to those having a porosity suitable for filtration, liquid-liquid contacting, and liquid -gas contacting. A fluid phase that flows through the hollow portion of a potted hollow conduit, called the lumen or bore for hollow tubes and hollow fibers, can transfer mass or energy to a fluid which surrounds the outer surface of the hollow conduit. A hollow conduit that is a porous membrane can be described by an outer shape or dimension and an inner shape or dimension with a porous wall thickness between them. A hollow non-porous conduit is a conduit that can be described by an outer shape or dimension, an inner shape or dimension, with a non-porous wall thickness between them. For hollow tubular filaments, having porous or non-porous walls, inner diameter defines the hollow portion or lumen of the tube and can used to carry one of the fluids or exchange medium.

The hollow membranes or hollow conduits may be braided or twisted and optionally thermally annealed in a first step and then the individual tubes separated from each other after cooling to form self supporting helical shaped or non-circumferential shaped single tubes. Thermal annealing sets the crests and bends of the hollow tube so that the individual hollow tubes or cords can be separated and handled without straightening. These shaped hollow tube may be potted in the thermoplastic resin as described.

The outer or inner surface of a hollow fiber membrane can be skinned or unskinned. A skin is a thin dense surface layer integral with the substructure of the membrane. In skinned membranes, the major portion of resistance to flow through the membrane resides in the thin skin. The surface skin may contain pores leading to the continuous porous structure of the substructure, or may be a non-porous integral film-like surface. In porous skinned membranes, permeation occurs primarily by connective flow through the pores. Asymmetric refers to the uniformity of the pore size across the thickness of the membrane; for hollow fiber conduits, this is the porous wall of the fiber. Asymmetric membranes have a structure in which the pore size is a function of location through the cross-section, section, typically, gradually increasing in size in traversing from one surface to the opposing surface. Another manner of defining asymmetry is the ratio of pore sizes on one surface to those on the opposite surface.

Manufacturers produce conduits such as pipe and thick walled channels useful for housings, sleeves, and endcaps; hollow porous membrane conduits; and non-porous hollow conduits from a variety of materials, the most general class being synthetic thermoplastic polymers. These can be flowed and molded when heated and recover their original solid properties when cooled. As the conditions of the application to which the hollow conduit is being used become more severe, the materials that can be used becomes limited. For example, the organic solvent-based solutions used for wafer coating in the microelectronics industry will dissolve or swell and weaken most common polymeric hollow fiber membranes or thin walled hollow tubes. The high temperature stripping baths in the same industry consist of highly corrosive liquids that can destroy membranes and thin walled hollow tubes made of common polymers. High temperatures and pressures will deform and weaken may polymeric hollow membranes and thin walled hollow tubes. Perfluorinated thermoplastic polymers useful for housings, sleeves, and hollow conduits may include but not limited to perfluoroalkoxy (Teflon@ PFA from Dupont, Neoflon® PFA from Daikin, Teflon® PFA Plus from Dupont), perfluoromethylalkoxy (Hyflon® MFA from Ausimont), fluorinated ethylene propylene (Teflon® FEP from Dupont) and co-polymers of these. These perfluorinated thermoplastics are chemically resistant and thermally stable, so that hollow membranes and hollow tubes made from these polymers, co-polymers, and co-extruded versions of them can have a decided advantage over less chemically and thermally stable polymers. Other useful thermoplastic fluoropolymers that can be used may include homopolymers and copolymers comprising monomeric units derived from fluorinated monomers such as vinylidene fluoride (VF2), hexafluoropropene (HFP), chlorotrifluoroethylene (CTFE), vinyl fluoride (VF), trifluoroethylene (TrFE), and tetrafluoroethylene (TFE), among others, optionally in combination with one or more other non-fluorinated monomer. A modified PTFE, PTFM is suitable as a shell material or containment material for the lumens as this material is capable of bonding and adhearing to the potted material, but is still not melt processable. For less severe conditions of use, other thermoplastics or their blends may be used in the practice of this invention and can include but not limited to, polyether sulfone (PES), ultra high molecular weight polyethylene (UHMWPE), high density polyethylene (HDPE), and other polyolefins The invention can also be used for similar but non identical materials such as polyethylene potting material in a polypropylene shell or MFA potting material in a PFA shell. Protrusions, grooves, or channels can be made in housings or sleeves made from these materials.

The exchange device may be made from a housing, hollow conduits, and potting resin that includes several thermally stable, chemically compatible, and mechanically strong fluoropolymers. The fluoropolymers may include, for example, a homopolymer or a copolymer formed from monomer units containing fluorine. The housing and hollow conduits may be co-extruded and include one or more layers of fluoropolymer, or different layers of fluoropolymer on the inner and outer surfaces.

PFA and FEP are examples of fluoropolymers that can be made into hollow porous membranes using the Thermally Induced Phase Separation (TIPS) process. In one example of the TIPS process a polymer and organic liquid are mixed and heated in an extruder to a temperature at which the polymer dissolves. A membrane is shaped by extrusion through an extrusion die, and the extruded membrane is cooled to form a gel. During cooling the polymer solution temperature is reduced to below the upper critical solution temperature. This is the temperature at or below which two phases form from the homogeneous heated solution, one phase primarily polymer, the other primarily solvent. If done properly, the solvent rich phase forms a continuous interconnecting porosity. The solvent rich phase is then extracted and the membrane dried.

The housing, endcaps, or sleeves used in exchange devices may be but are not limited to thick walled conduits that are cylindrical tubes, conduits having any number of sides including hexagonal, rectangular or triangular conduits. The housing, endcaps, or sleeves have an inner dimension capable of containing one or more hollow thin walled conduits bonded to the interior of the housing, endcap, or sleeve. The housing or sleeve may be a thermoplastic, preferably a perfluorinated thermoplastic, but can also be a thermoplastic coated metal, composite thermoplastic, or thermoplastic coated ceramic material with grooves that exhibits chemical compatibility for the bonding process and the intended use of the device. The housing or sleeves may be formed from co-extruded thermoplastics with the thermally bonded inner layer capable of bonding to the potting resin or hollow conduits and the outer layer providing mechanical support for the housing. Preferably the inner layer of a co-extruded thermoplastic housing will have a lower melting temperature than the outer layer. Alternatively, the housing or sleeves can be molded to have one or more thermoplastic portions or layers in the bonding region. The structures such as protrusions, grooves, a combination of these, or the interior surface of the housing or sleeve may be coated or molded with a thermoplastic inner layer, for example MFA, to provide an adhesion layer to the housing or sleeve material. One skilled in the art would know to look to ASTM tables to find the permitted housing or sleeve conduit wall thickness for the housing, endcap, or sleeves for a particular use of the exchange device. Where a housing, endcap or sleeve includes one or more structures that are grooves, preferably the depth of the grooves or channels are in the conduit wall are less than about one half the thickness of the wall.

The housing, sleeve, or endcap used to form a single entity consisting solely of thermoplastic materials, and preferably perfluorinated thermoplastic materials, can be prepared by first pretreating the surfaces of both ends of the housing or one or more sleeve before the potting and bonding step. This can be accomplished by melt-bonding or sintering a powdered form of the thermoplastic potting material to the housing, one or more sleeves, and groove or protrusions on their inner surfaces. The internal surfaces on both ends of the housing may be heated close to their melting point or just at the melting point and immediately immersed into a cup containing powdered [Polytetrafluoroethylene-co-perfluoromethylvinylether], MFA, thermoplastic potting resin available from Ausimont USA Inc. Thorofare, NJ. Since the surface temperature of the heated surface of the housing is higher than the melting point of the potting resins, the potting resin is then fused or sintered to the thermoplastic housing, any channels, grooves, or raised features or a combination of these for bonding the potting resin, the hollow conduits, or a combination of these to the housing. A non-limiting example of raised features or protrusion on the housing or sleeve surface is the sintered thermoplastic coating 936 illustrated in FIG. 9. The housing may be polished with a second heat step to fuse any excess un-melted thermoplastic powder. It is preferred that each end of the housing or each of the sleeves be treated at least twice with this pre-treatment. FIG. 9 illustrates an adherent thermoplastic coating 936 formed on the inside of a thermoplastic housing with one or more grooves 904 and 912.

Hollow conduit exchange devices of the present invention, especially those including one or more porous and or non-porous hollow tubes or other shaped conduits, are advantageous because they can be made with high fluid contact surface areas. The high contact surface area is due to the ability to obtain a very high packing densities of the hollow conduits in these devices. Packing density relates to the amount of useful membrane surface per volume of the device. It is related to the number of tubes, conduits, fibers, or combinations of these that can be potted in a finished contactor. The packing density of the hollow conduits such as hollow fibers, hollow tubes, cords of these and combinations of these within the shell tube, housing, or sleeve can be in the range of from 3-99 percent by volume, preferably 20-70 percent by volume, and more preferably 40-60 percent by volume.

Hollow fiber microporous membranes can be used for mass exchange operations such as filtration, gas contacting, and degassing. Hydrophobic microporous hollow fibers membranes are commonly used for degasser or contactor applications, with a liquid to be treated that does not wet the membrane. For gas contacting, the liquid flows on one side of the membrane and a gas mixture preferably at a lower pressure than the solution flows on the other. Pressures on each side of the membrane are maintained so that the liquid pressure does not overcome the critical pressure of the membrane, and so that the gas does not bubble into the liquid. Critical pressure, the pressure at which the liquid will intrude into the pores, depends directly on the material used to make the membrane, inversely on the pore size of the membrane, and directly on the surface tension of the liquid in contact with the gas phase. Typical applications for contacting membrane exchangers are to remove dissolved gases from liquids, "degassing"; or to add a gaseous substance to a liquid. For example, ozone can be added to very pure water to wash semiconductor wafers.

Exchange devices of the present invention may be operated with the process fluid contacting the inside or the outside surface of the potted hollow tubes or conduits, depending on which is more advantageous in the particular application. Baffles and other inserts may be mounted on the inside of the housing or fluid flow fittings to effect fluid distribution on the shell side of the hollow conduits and housing.

Potting is a process of forming a liquid tight seals around each hollow conduit, for example hollow tube or hollow fiber, within the housing. The tube sheet or pot separates the interior of the housing for the exchanger or contactor from the environment. The potting material is bonded to the housing including surface structures such as protrusions, channels, or grooves. This bonding may include physical mixing of melted materials as during welding or fusion of thermoplastics, mechanical interlocking of material, as well as chemical bonding of the materials. Preferably the bond between the housing and its grooves provides a fluid tight seal. The bond to form the unitary end structure may be formed between the potting material and the housing surfaces and housing groove surfaces. The bond may be the result of a union of the potting and housing materials by fusion, melting, or welding. Preferably the potting and housing, including any of the housing's coated surfaces, are thermoplastics that can be fused or welded together by various heating methods such as but not limited to welding, induction heating, ultrasonic bonding, infrared heating, and potting. The housing and potting material may be the same or different materials, for example the housing may be PFA and the potting MFA. The potting material can be thermally bonded to the housing vessel and channels, grooves, or raised structures on the inside of the housing in the present invention to produce a unitary end structure. The inside of the housing and channels may be coated with a layer of the potting resin sintered, molded or co-extruded to the one or more inner housing surfaces to facilitate the bonding between the potting and housing.

Fluidly sealed refers to potting resin, thermoplastic housing, hollow conduits and combinations of these that have either welded or fused together or formed a mechanical bond together that is characterized in that fluid does not flow past the bonded areas. For hollow conduits like fibers or tubes in the potted area, fluid flows through inside of the tubes and is physically separated from fluid on the outside of the hollow tubing or fiber by the conduit walls and potting.

The term unified terminal end block or unitary end structure describes a mass or well of a thermoplastic resin bonded to one or more hollow conduits such as hollow tubes, hollow fibers, or cords of these and a housing or sleeve. Bonding of the resin with the housing and conduits can include mechanical bonds between the resin and structures of the housing and conduits, chemically bonding, welding, or fusion bonding, or any combination of these. Figure 3 illustrates an example of hollow conduits 318 and 320 fusion bonded to a thermoplastic resin 310 and filling a portion of one or more channels 304 in the housing inner surface 316 that was used to form a unified terminal end block structure. FIG. 3 illustrates a unified terminal end block structure that has been cut open to expose the hollows of the tubes. The thermoplastic resin 310 occupies a portion of the grooves 304 and spaces between the tubes 330 and forms a bonded structure, that is acombination of mechanical and welded bonding, between the resin, tubes, grooves and housing walls. The resin may also bond to a layer of sintered thermoplastic material on the housing and groove surfaces (not shown).

The unitary end structure(s) may be cut or machined and the lumen of the hollow conduits exposed. The potting resin and hollow tube ends may be opened so that the resin and tube ends are even with the housing or sleeve end as illustrated for a single end portion of an exchange device shown in FIG. 3 or FIG. 7D. Alternatively, potting material and tubing may be removed and opened to a region located below one or more of the end of the housing or sleeve end as illustrated in FIG. 1A, FIG. 1B, and FIG. 7C. For example, as shown in FIG. 1A, potting resin 106 is removed from the housing end 132 or 121 to a region below the ends of the housing 128 or 117. Similarly in FIG. 1B, potting can be removed from the housing end 163 or 153 to a region below or inside the ends of the housing shown by 161 or 155.

Porous or skinned hollow fiber diameters can range from 100-1000 um in diameter. Wall thickness should be minimized and preferred thickness is 25-350 um. Hollow fiber beds can consist of mats of fibers with thickness ranging from 1-25 cm in depth and length and width of 10-100 cm. The beds can be circular with diameters of 1-25 cm and lengths of 20-300 cm and contain multiple baffles to distribute gas throughout the bed of fibers. Hollow fibers in the contactor may be straight or can be loosely packed. The hollow fibers may be extremely long and wrapped to a length nearly equivalent to the length of the device, effectively closing off the ends of the fiber to melt resin flow during the potting process.

Hollow conduits that are non-porous hollow tubes made from thermoplastics with outside diameters ranging from 0.007 to 0.5 inches (0.017 to 1.27 cm), and more preferably 0.025 to 0.1 inches (0.063 to 0.25 cm) may be used in the exchange devices of the present invention. For heat exchanger or mass exchange through non-porous hollow tube, preferably the hollow tubes may have a wall thickness ranging from 0.001 to 0.1 inches (0.0025 to 0.25 cm), preferably 0.003 to 0.05 inches (0.0075 to 0.0125 cm) in thickness. For mass exchange through non-porous hollow tubes- gas separations- the thickness of the hollow tube wall can be made thinner. The hollow tubes can be used individually, or the tubes can be combined by braiding, plaiting, or twisting them to form cords comprised of multiple hollow tubes. The hollow tubes may be extremely long and wrapped to a length nearly equivalent to the length of the device, effectively closing off the ends of the hollow tube to melt resin flow during the potting process.

Thermoplastic hollow conduits are co-extruded thermoplastic tubes that can be potted into sleeves or housings to form exchange devices. The co-extruded tubing or porous hollow fibers have outer layer or portion that include a thermoplastic with a lower melting point or melt flow index than the inner most portion or layer of the co-extruded tubing. The layers of the co-extruded tubing are thermally bonded or fused to one another. One non-limiting example of this type of co-extruded tubing has an MFA outer layer and a PFA inner layer. Another example is a hollow tube having an FEP outer layer and a PFA inner portion. One or more of the layers of the co-extruded hollow conduit may include a thermally conductive material, preferably one or more of the outer layers of the hollow conduit includes a thermally conductive material. For example the MFA outer portion of a co-extruded tube may include a conductive carbon particles. During potting, the conductive particles in the MFA of the tubes will mix or combine with MFA from adjacent hollow tubes or with the thermoplastic potting resin. Unpotted regions of the co-extruded tube will retain the MFA layer with the thermally conductive particles as illustrated in FIG. 2C. This thermally conductive layer will contact the fluid on the outside of the tube and transfer energy to the fluid on the lumen of the tubing.

The one or more thermoplastic materials for the co-extruded tubing can be selected for their chemical and or physical properties, for example thermal conductivity, as well as properties that make the tube suitable for bonding with each other, bonding to a resin, or a combination of these used in the potting process. For example, during potting, the outer MFA layer of the tubing will melt and fuse with the MFA from adjacent hollow tubes, fuse with resin in the pot, or a combination of these while the inner PFA layer of the tube keeps the lumen opened. Potting temperature or fusion temperature can be chosen so that the one or more outer layers of the co-extruded tubing melt and fuse or combine with adjacent tubes or a thermoplastic potting resin but the inner layer remains open. For tubing having an outer MFA layer and an inner PFA layer, the preferred potting temperature is between about 290-305 °C; potting temperatures for other co-extruded thermoplastic hollow tubes may be determined by routine experimentation and use of the testing manifold of FIG. 8.

As illustrated in FIG. 1A-C, an exchange device may include one or more co-extruded thermoplastic hollow tubes. Each tube has an inlet and an outlet for fluid flow, the hollow tubes fluidly sealed by a bond with other co-extruded thermoplastic hollow tubes or to a thermoplastic resin. The inlet of the hollow tubes may be fluidly sealed by a bond to a sleeve to provide a fluid to the hollow portion of the tubes and the outlet of the hollow tubes fluidly sealed by a bond to another part of the sleeve or to a second sleeve to provide for removal of fluid from the hollow portion of the tubes. As illustrated in detail in FIG. 7C, the co-extruded tubes may be bonded together and to the housing by thermoplastic resin 722. The exchange apparatus may have a sleeve or housing that encloses the hollow tubes, for example 124 in FIG. 1A, or 186 in FIG. 1C. Preferably the hollow tubes, potting resin, and the housing are thermoplastics, and even more preferably, perfluorinated thermoplastics.

Hollow co-extruded thermoplastic conduits used in the invention can be impregnated with thermally conductive powders or fibers to increase their thermal conductance. Examples of useful thermally conductive materials include but are not limited to glass fibers, metal nitride fibers, silicon and metal carbide fibers, or graphite. The thermal conductivity of the hollow thermoplastic tubes or impregnated thermoplastic hollow tubes useful in this invention for energy exchange is preferably greater than about 0.05 watts per meter per degree Kelvin. The co-extruded hollow tubes may includes a thermal heat conductor material mixed or combined with any of the layers of the hollow tube, preferably the outer layer. The thermoplastic of the outer layer can include, for example, carbon nanotubes, graphite fibers made from petroleum pitch that can have thermal conductivity values of about 500-1000 W/mK, carbon fibers based on polyacrylonitrile (PAN) that can have thermal conductivities of about 10 W/mK, electrically insulative ceramic fillers like boron nitride that can have a thermal conductivity of about 60-80 W/mK, aluminum nitride with a thermal conductivity of about 300 W/mK, or mixtures of these.

In the practice of various embodiments of the present invention, combinations of porous and non-porous hollow tubes may be potted together. Such devices may be used to limit the amount of mass transferred while maximizing the amount of energy transferred between a process and an exchange fluid. For example temperature conditioned aqueous sulfuric acid may be re-circulated on the shell side of an exchange device to condition the temperature of air in a cleanroom and remove trace amounts of organic amines from the air. Temperature conditioning of the air may be changed by the number of non-porous potted hollow tubes while the amount of air in contact with the aqueous sulfuric acid scrubbing solution for mass exchange is controlled by the number and type of porous potted fibers present in the device.

Baffles may be useful in the practice of the present invention to enhance the mixing and distribution of fluids on either side of the hollow tube contactor or exchange device (not shown in FIG. 1). The hollow fiber contactor or exchanger can be used in a single pass mode or in a re-circulating mode for either or both the process fluid and or the exchange fluid as illustrated in FIGs. 4-6. Preferably the contactor is provided with two or more fluid ports or fittings on the shell and lumen side of the housing. Usually one port serves as a fluid inlet and the second serves as a fluid outlet. The ports or fluid connections on the shell side of the contactor have restricted fluid flow with the lumen side inlet and outlet port because of the porous wall of the membrane hollow conduits or the non-porous wall of the hollow tubes. Preferably the fluid flowing within the tubes or and or fibers and the shell side fluid flowing on the outside of the tubes and or fibers flow counter current to each other as illustrated in FIG. 8; preferably the fluid flows in a manner which maximizes a cross flow of the fluids with respect to one another.

FIG. 2B illustrates different types of grooves- those in the potted region (244, 246, 250) and those which may lie outside the potted region 242. Grooves in the potted region bond with the potting resin or thermoplastic. As shown in FIG. 2B, a groove 242 can be added outside of the potted region. There may be one or more of these grooves outside the potted region and these grooves or channels may be on the inside or outside surface of the housing. Grooves including but not limited to 244, 246, 250 bond with the potting resin and are considered to be in the potted region and can form a unitary structure with the potting resin and hollow tubes. The number of grooves and their surface area may be changed without limitation. Without wishing to be bound by theory, the groove 242 may be used to reduce radial pressure on the pot and shell interface by hinging at this point. The shell may be pressurized by the process fluid which tends to expand the thermosplastic shell. The stress relief on the inside diameter or the outside diameter may allow the shell to flex about this feature, thereby reducing stress on the pot and shell interface and maintaining its integrity.

As shown in FIG. 2, the grooves or equivalently channels may be made by machining or molding the grooves in the housing. Without limitation the grooves may be concentric and separated by equal or unequal spacing as shown in FIG. 2B; the grooves may be in the form of one or more spirals along the inside of the tube, they may consist of a series of groove channels along the axis of the housing; a hatched pattern, cross hatched pattern, variations of these, or a combination of these. The grooves or channels are preferably located in from the end of the housing so that the potting material may cover over and bond with one or more of the channels. The channels and the housing wall may be covered or coated with a sintered thermoplastic material applied to the grooves as disclosed herein for bonding with the potting material. Preferably the depth of the grooves or channels permits the housing to maintain a pressure and temperature rating suitable for its use. One skilled in the art would know to look to ASTM tables to find the permitted wall thickness for the use of the potted device. Preferably the depth of the grooves or channels are less than about one half the thickness of the housing or sleeve wall.

Groove, channel, or slot refer to narrow openings or depressions in the housing, endcap, or sleeve wall and may be used interchangeably. In a preferred embodiment the grooves are interconnected with each other as illustrated for one end portion of a housing in FIG. 7C or in FIG. 10. The channels or vent slots allow gas may be generated or trapped in the groove during the potting process to move out from the channel. The removal of gases from the channel allows potting melt to fill the grooves, to bond, and optionally interlock the potting material with the housing. The vent channels between the grooves can have a volume that allows gas in a groove to escape and preferably the vent channels have the same depth as the grooves. The number and distribution of channels between the grooves should be sufficient to vent gases present in the housing during potting. The number can be varied depending upon for example the size of the housing, the wall thickness of the housing, and the amount of gas that needs to be vented during the potting process. The depths of the vent channels may be varied between grooves or sloped to further facilitate the removal of gases from the grooves. In an exchange apparatus the housing may have one or more end portions with grooves.

The groove and vent edges as well as the bottoms of the grooves may have but are not limited to square, beveled, or a radius finish; the edge of the top and bottom most groove in the housing may be slotted or vented with the slots tapering to the inner wall (not shown). One or more of the grooves in the end portion of the exchange device are preferably interconnected by slots or channels and the exchange device may have one or more end portions.

The grooves or channels may have a shape that maximizes surface area of contact and bonding between the potting material and the housing grooves. The depth and angles of the sidewalls of the grooves may be made to vary the amount of bonding surface between the potting material and the grooves. Where an increase in the amount of shear component for the bond between the channel and potting is desired, deep thin channels are preferred. The additional surface area of the channels, some of which may not be parallel to the housing walls, result in fusion and adhesion of the potting resin to all faces or surfaces of the groove. The radial force created by thermal or pressure expansion of the device during use may have a portion of this force transferred to a shear component through bonding of the potting resin with the surfaces of the grooves which greatly improves the strength of the device.

While grooves and channels are preferred for bonding the thermoplastic resin to the housing of the present invention, it is also contemplated that raised structures permanently bonded or fused onto the inner surface of the housing tube could be made and used with the same effect as channels or grooves for purposes of bonding the thermoplastic potting resin to the housing. Such raised structures may be considered as an equivalent to grooves or channels for purposes of the present invention. A sintered thermoplastic bonded to the inner housing wall is a non-limiting example of raised surface structures or protrusions on the housing. Preferably the structures result in bonding or fusion between the raised structures and the potting resin. Preferably the bonding transfers a portion of the radial force into a shear component of force between the potting resin and the raised structure.

Channels or grooves may be formed in a housing which can include, endcaps, sleeves, or any of these bonded to a housing wall. The depth and area of the grooves or height of protrusions on the inner wall of the housing that are used to bond with a thermoplastic resin and bond to one or move hollow tubes are chosen to bond with the resin and form a fluid tight seal that maintains separation between fluids on the inside and outside of the hollow tubes. The depth and area of the grooves, vent channels, or height and area of protrusions on the inner wall of the housing for a particular use of the exchange device may be determined using the test manifold of FIG. 8 and the application parameters for the exchange device including but not limited to temperature, pressure, and chemical reactivity of the fluids contacting the exchange device. The device preferably includes 1-4 grooves, more preferably 2-3 grooves each having a depth that is within the safety limits for use of the device, preferably about half the housing wall thickness or less, and a width opening or height of about 0.05 to 0.5 cm, preferably 0.1 to 0.3 cm. Where they are used, vent channels can be formed between the grooves along the wall of the housing or sleeve. Preferably there are about 4-8 vent channels per groove and the depth of the vent channels the same or less than those of the grooves.

It is also contemplated that additional means for reducing stress between the housing and the potting material may be used in addition to channels or grooves in the housing. For example a housing with channels in the inside of the housing may have the outer wall of the housing thinned by machining to relieve pressure on the interface between the potting material and the shell. The thinned material will yield to material movement more readily, allowing temperature and pressure effects to be self compensating by flexible components to maintain the integrity of the bond between the potting resin fused to the housing.

The exchange device may include one or more hollow conduits potted at each end into to a thermoplastic housing. Integral exchange devices made with hollow tubes potted into a thermoplastic housing, a packing density of about 40-50%, but without one of more grooves in the housing were made and used as heat exchangers as summarized by the data in Table 1. It would be reasonable to expect that exchange devices of the present invention, with co-extruded tubes and optionally grooves in the housing, having similar numbers of hollow conduits would have exchange performance similar to those shown in Table 1.

**TABLE 1 (SI units)**

| Shell ID (inches) | # hollow tubes-approx 42.6 twist/m | tube length (cm) | heat transfer surface area (ft²) | Inlet tube temp °C | Outlet tube temp °C | tube flow rate (lpm) | Inlet shell temp °C | Outlet shell temp °C | shell flow rate (lpm) |
|---|---|---|---|---|---|---|---|---|---|
| 2.25 | 680 | 45.7 | 1.315 | 70.66 | 45.26 | 5.55 | 13.09 | 63.14 | 2.97 |
| 2.25 | 680 | 45.7 | 1.315 | 70.02 | 35.77 | 3.80 | 13.05 | 38.63 | 2.97 |
| 2.25 | 680 | 45.7 | 1.315 | 68.15 | 26.71 | 2.64 | 13.24 | 52.17 | 2.97 |
| 2.75 | 1000 | 20.3 | 0.859 | 70.5 | 48.87 | 9.5 | 12.46 | 49.58 | 5.8 |
| 2.75 | 1000 | 20.3 | 0.859 | 70.5 | 42.8 | 7.2 | 12.4 | 46.8 | 5.8 |
| 2.25 | 680 | 68.6 | 1.971 | 70.1 | 22.91 | 4.4 | 14.5 | 46.5 | 6.6 |

**TABLE 1 (Imperial units)**

| Shell ID (Inches) | # hollow tubes-approx 13 twist/ft | tube length (inches) | heat transfer surface area (ft²) | Inlet tube temp °C | Outset tube temp °C | tube flow rate (lpm) | Inlet shell temp °C | Outlet shell temp °C | shell flow rate (lpm) |
|---|---|---|---|---|---|---|---|---|---|
| 2.25 | 680 | 18 | 14.15 | 70.66 | 45.26 | 5.55 | 13.09 | 63.14 | 2.97 |
| 2.25 | 880 | 18 | 14.15 | 70.02 | 35.77 | 3.80 | 13.05 | 58.83 | 2.97 |
| 2.25 | 680 | 18 | 14.15 | 68.15 | 26.71 | 2.64 | 13.24 | 52.17 | 2.97 |
| 2.75 | 1000 | 8 | 9.25 | 70.5 | 48.87 | 9.5 | 12.46 | 49.58 | 5.8 |
| 2.75 | 1000 | 8 | 9.25 | 70.5 | 42.8 | 7.2 | 12.4 | 46.8 | 5.8 |
| 2.25 | 660 | 27 | 21.22 | 70.1 | 22.91 | 4.4 | 14.5 | 46.5 | 6.6 |

Heat transfer between water on the lumen side of the hollow tubes and water on the shell side of the hollow tubes fluids at the inlet temperatures given in Table 1 were approximately the same (within experimental error of less than about 10%) through the hollow tube walls potted in the device. Calculated heat, Q, transferred by the shell fluid ranged from about 8,000 watts to 10,000 watts at different tube flow rates for the exchange device in Table 1 with 5.7cm (2.25 inch) diameter and 45.7cm (18 inch) length; Q ranged from about 13,900 watts to 15,000 watts at different tube flow rates for the 7.0cm (2.75 inch) diameter housing with 8 inch length, and Q for the 5.7cm(2.25 inch) inside diameter device with 68.6cm (27 inch) length was about 14,700 watts.

One advantage of the present invention is the large surface area of hollow conduit that can be potted in a device in a small volume device. For example, the devices of Table 1 with packing densities of from about 40 to 50%, have approximately 11 cm2 of transfer surface area per cubic centimeter of housing volume. Higher packing densities would give a higher value, and lower packing densities would give smaller value.

One embodiment of the present invention is an exchange device including one or more potted hollow conduits capable of transferring heat from a first fluid to a second fluid through the walls of the hollow conduits, the exchange device integral at a temperature of at least 100 °C and a pressure of at least 344.7KN/m² (50 psig) the temperature below the continuous use temperature or melting temperature of the hollow conduit material, preferably the exchange device remains integral at a temperature of at least 160 °C and a pressure of at least 482.65KN/m²(70 psig) the temperature below the continuous use temperature or melting temperature of the hollow conduit material. Preferably the exchanger has a packing density by volume of hollow conduits between 20 and 70%; more preferably 40-60% by volume. A device configured with potted hollow conduits to have about 9 ft² (0.85 m²) of exchange surface area is capable of exchanging at least about 13,000 watts of energy between a fluid flowing on a first side of the hollow conduit with a second fluid flowing on a second side of the hollow conduits; preferably the first fluid flows at 9.5 lpm or less on a first side of the hollow conduits and the second fluid flows at 5.8 lpm or less on the second side of the hollow conduits. The exchanger is capable of maintaining its fluid integrity under a variety of test conditions of temperature, pressure, and duration as shown by the results listed in Tables 2-5 with packing densities in the range of 20 to 70 percent. Where the hollow conduits of the devices are similar to those used for the exchangers of Table 1, it would be reasonable to expect that exchange devices of the present invention could be made and have similar exchange capabilities.

For devices prepared using porous hollow fibers, devices having a similar packing density as shown in Table 1 may be made and similar transfer surface areas obtained (not including the internal membrane area).

Various aspects of the present invention will be illustrated with reference to the following non-limiting examples.

### Comparative EXAMPLE 1

This example compares the ability of various potted exchange devices to withstand stress testing.

Table 2 shows the advantage of adding the grooved interface. The original PFA design showed loss of housing to potting material integrity at 120°C. The temperature/ Pressure test is a method of accelerating long term ambient conditions for the device. The MFA only device showed loss of bond integrity at 150°C. All tests on MFA devices with the improved interface are integral up to 200°C and beyond, the PFA device with the improved groove or channel interface is also integral at temperatures up to 160°C. This device was destructively tested after the 160°C to determine the strength of the bond. The strength of the bond is determined by cutting off thinning the outside of the device leaving approximately 2.0-2.5mm (.080 - .100") wall thickness. Axial and circumferential cuts are made into the shell approximately 6.35mm (.25") above the potted area, leaving a tab approximately 12.7mm (.5") wide by 6.35mm (.25") long. The tab can then be used to pull up on the material in an attempt to pull apart the shell material from the potted material. In this manner the strength of the bond can be tested qualitatively by force, or quantitatively by an instrument such as an Instron.

The process of this example improves the overall strength of the device by eliminating stress at this interface, and transferring the stress to the potted material entrapped in the grooves. Without wishing to be bound by theory, the grooves, and their additional surface area, some of which is not parallel to the housing walls, also add adhesion of the potting resin to at least a portion, and preferably all surfaces or faces of the groove, adding a shear component to a radial force created by thermal or pressure expansion of the housing shell. This shear component greatly improves the strength of the device.

**TABLE 2 (SI units)**

| Test Condition | 120°C, 482.65KN/m², 5h | 130°C, 482.65KN/m² ,5h | 140°C, 482.65KN/m² ,5h | 150°C, 482.65KN/m² ,5h | *160°C , 5hrs | *170°C , 5hrs | *180°C , 5hrs |
|---|---|---|---|---|---|---|---|
| PFA tube, original | integrity loss | | | | | | |
| PFA tube w/stress groove relief | integrity loss | | | | | | |
| PFA tube w/grooved ID | Passed | Passed | Passed | Passed | Passed | | |
| MFA, original | Passed | Passed | Passed | integrity loss | | | |
| MFA tube w/stress groove relief | passed | Passed | Passed | Passed | Passed | Passed | passed |
| MFA tube w/grooved ID | Passed | Passed | Passed | Passed | Passed | Passed | passed |
| Tubes flamed with rotational fixture, MFA original | | Passed | Passed | passed | passed | passed | passed |
| Tubes flamed with rotational fixture, MFA threaded ID | | Passed | Passed | passed | passed | passed | passes |

**TABLE 2 (Imperial units)**

| Test Condition | 120°C, 70psig, 5h | 130°C, 70psig, 5h | 140°C, 70psig, 5h | 150°C, 70psig, 5h | *160°C , 5hrs | *170°C , 5hrs | *180°C 5hrs |
|---|---|---|---|---|---|---|---|
| PFA tube, original | integrity loss | | | | | | |
| PFA tube w/stress groove relief | integrity loss | | | | | | |
| PFA tube w/grooved ID | Passed | Passed | Passed | Passed | Passed | | |
| MFA, original | Passed | Passed | Passed | integrity loss | | | |
| MFA tube w/stress groove relief | Passed | Passed | Passed | Passed | Passed | Passed | passed |
| MFA tube w/grooved I D | Passed | Passed | Passed | Passed | Passed | Passed | passed |
| Tubes flamed with rotational fixture, MFA original | | Passed | Passed | passed | passed | passed | passed |
| Tubes named with rotational fixture; MFA threaded ID | | Passed | Passed | passed | passed | passed | passed |

### Comparative EXAMPLE 2

This prophetic example illustrates that the potted device may be used for heat and or mass exchange including but not limited to filtration, gas contacting, heat exchange, gas scrubbing and combinations of these.

The potted devices may be placed in an apparatus for cleaning or chemical modification of substrate surfaces including but not limited to single wafer cleaning tools, re-circulating cleaning baths. The device can also be used for temperature conditioning of fluids prior to disposal (such as hot sulfuric acid used to remove polymer coatings from optical fibers and photoresists from coated silicon wafers). As illustrated in FIG. 4 an exchange fluid or working fluid 450 in a tank 448, (or a chiller or cold water from a building supply source not shown) can be directed to flow through one side of the potted heat exchanger 416. A pump 446 may be included to re-circulate the exchange fluid 450 if necessary and particle filters 408 and valves 412 may also be used. Process fluid 428 from a cleaning or process bath, including but not limited to solvents, acids, bases, oxidizers, and useful combinations and mixtures of these may be re-circulated on the shell side of the hollow tubes in the exchange device and the process fluid temperature conditioned (heating or cooling) by contact with the exchanges fluid 450 through the hollow tube walls. The temperature conditioned fluid 428 is returned to the process bath or tool for use on the substrates 434. As shown in FIG. 5, a potted exchange device 528 of the present invention may be used to cool a process or cleaning fluid prior to discharge at outlet valve 532. An example of such fluids includes but are not limited hot sulfuric or phosphoric acids.

### Comparative EXAMPLE 3

This example illustrates a potted membrane device and method of making it suitable for use at high temperature.

A potted filtration, device having a 5.7cm (2.25") ·ID and 32.1cm (12.65") in length MFA housing, and contained about 3000 MFA porous hollow fibers. The device contained 4 grooves each having a depth of 0.25 cm and height 0.15 cm. Vent channels were formed between the grooves. There were about 6 vent channels per groove and the depth of the vent channels was about 0.15 cm. The potting melt was MFA heated to 278 °C for 3 days.

The device was tested for fluid integrity under the following conditions. Hot fluid at the temperature of 100 °C to 210 °C under pressure was fed into the shell side of the device at a very slow flow rate and no fluid flow on the tube side. Both end-caps were capped. Visaully inspect the device daily. Any accumulation of oil on the lumen side indicate device failure. The result from this experiment is listed in Table 3.

A test setup which can be used to test these devices is shown in FIG. 8. During testing the fluid entered at the inlet 820 and flow out at the outlet 838 on the shell side. The fluid used is the heat transfer fluid HT3 made by the Lube-tech lubrication Technologies, Inc. It was heated 826 with Chromalox heat exchanger model #NWH0-34515 and pressure was control by the outlet flow valve 838. The valve 838 was closed to restrict the flow and increase the fluid pressure which was measured using an Omega pressure gauge 822. The fluid flow at about 1.74 litres (0.46 gallon) per minute at 482.65KN/m² (70psi). The test was stopped at 210°C, because of fluid degradation. The results of the tests are summarize in Table 3.

**Table 3. Integrity Test Results for devices made with venting slots in grooves. (SI units)**

| Test | Temperature (°C) | Pressures (KN/m²) | Duration (hours) | Device Integrity |
|---|---|---|---|---|
| 1 | 100 | 1103.2 | 100 | Passed |
| 2 | 160 | 482.65 | 24 | Passed |
| 3 | 170 | 482.65 | 24 | Passed |
| 4 | 180 | 482.65 | 24 | Passed |
| 5 | 190 | 482.65 | 24 | Passed |
| 6 | 200 | 482.65 | 24 | Passed |
| 7 | 210 | 482.65 | 8 | Passed |
| | | | | |

**Table 3. Integrity Test Results for devices made with venting slots in grooves (Imperial units).**

| Test | Temperature (°C) | Pressure (psig) | Duration (hours) | Device Integrity |
|---|---|---|---|---|
| 1 | 100 | 160 | 100 | Passed |
| 2 | 160 | 70 | 24 | Passed |
| 3 | 170 | 70 | 24 | Passed |
| 4 | 180 | 70 | 24 | Passed |
| 5 | 190 | 70 | 24 | Passed |
| 6 | 200 | 70 | 24 | Passed |
| 7 | 210 | 70 | 8 | Passed |

### EXAMPLE 4

This example illustrates co-extruded hollow tubing potted into a thermoplastic resin to form hollow tubes bonded into a thermoplastic sleeve.

In the preparation of potted devices, the process window can vary and is dependent on the MFA tubing material properties (melting point, melt flow index, tubing dimension and geometry). These properties can vary from batch to batch and can be accommodated by varying and adjusting process variables like temperature and potting time. Overheating during potting can result in the collapsed of the tubing and under heating can cause some tubing not to bond during the potting. Various techniques may be used to prevent tubing collapse, for example putting a metal wire into the fiber or tube lumen or filling the lumen with an inorganic salt. These methods however are labor intensive, costly and may add contaminants to the device.

Co-extruded tubing can be potted to sleeves or housings to form exchange devices. One embodiment of the invention is perfluorinated co-extruded tubing or articles such as exchange devices made from it. The co-extruded perfluorinated tubing can have one or more outer layers or portions that include a perfluorinated thermoplastic with a lower melting point or melt flow index than the inner most portion or layer of the co-extruded tubing. The different perfluorinated layers of the co-extruded tubing are thermally bonded to one another. One non-limiting example of such co-extruded tubing has an MFA outer layer and PFA on the inside layer as illustrtated in FIG. 12A and shown in FIG. 12C. Both perfluorinated thermoplastic layers are thermally bonded to each other during extrusion of the tubing. The overall dimension of the tubing shown is ID 0.004" ± 0.002" (0.01 ± 0.005 cm) with an MFA outer wall 0.003" ± 0.001" (0.0076 ± 0.0025 cm) and PFA wall 0.003" ± 0.001" (0.0076 ± 0.0025 cm). This tubing may be obtained from Zeus Industrial Products, Inc., Orangeburg, SC, USA.

An exchanger sample was made using five 3 inch (7.6 cm) long MFA outer layer/PFA inner layer co-extruded tubes thermoplastic hollow conduits inserted into a 3/8 inch (0.95 cm) x 3 inch (7.6 cm) PFA shell. This assemble was placed in a pool of molten MFA at 300°C for 16 hours. The sample was removed, cool down and cut opened to exposed the lumen. The sample was analyzed under the light microscope as shown in FIG. 13B and FIG. 13D. The MFA potting portion melted and fused in the pot, however as shown the tubes did not collapse under these potting conditions. A sample made using all MFA hollow tubes of similar length, wall thickness, and diameter completely collapsed the tube hollows when potted in a pool of molten MFA at 300 °C. This sample was analyzed under a light microscope as shown in FIG. 13A and FIG. 13C. This example illustrates the greater professing latitude available to make potted exchange devices when using co-extruded hollow tubes with higher melting point inner layer. Variations in hollow tube thermoplastic properties or heating equipment which may cause complete collapse of tubes during potting can be avoided by using co-extruded hollow tubes.

### EXAMPLE 5

This example illustrates the fabrication and integrity of an exchange device made with one or more co-extruded hollow conduits potted in a housing.

A bundle of 650 twisted and looped co-extruded tubing, about 42.6 twists per metre (13 twists per foot) was made. The tubing were 22.1cm (8.7") long, with 0.11mm (0.0042") internal diameter and a wall thickness of 0.15mm (0.006"). The tubing were made from two materials, MFA and PFA (Dupont 450 HP) thermally bondede to each other. The outer wall was MFA and the inner wall was PFA. Both the MFA and PFA layers had a thickness of about 0.076mm (0.003 inches), total wall thickness of about 0.15mm (0.006 inches). The bundle was placed in a shell made from MFA, having a 5.7cm (2.25") ID, 7.3cm (2.88") OD and 22.1cm (8.7") long. The shell contained 3 internal grooves on both ends. Each groove was 0.25 cm in depth and 0.15cm in width. The inside shell or housing wall on each end was sintered with a layer of powdered MFA.

The packing density was approximately 40%. The shell was placed in a heater block with a 10.2cm (4") ID by 10.2cm (4") deep cavity. The cavity was lined with a layer of aluminum foil. The shell was held vertically in the cavity with clamp, 310 grams of Ausimont's MFA 940AX resin was poured into the space between the shell and the cavity wall. The heater block was then heated to 297 °C and held at the temperature for 2 days. After 2 days the heater block was cooled slowly to 150 °C and then to room temperature. The shell with tubing was remove. The opposing end of the tubing was sealed to the opposite end of the housing using a similar potting method described. A cut was made across the diameter of the shell through the pots, at a position above the looped ends in the bundle to expose the hollow of the hollow conduits. Excess potting material was removed. Two 19mm (¾") PFA fluid fittings were thermally bonded to the shell.

The device was tested for fluid integrity under the following conditions, hot fluid at a temperature of 140 °C to 200 °C under pressure. The heated fluid was fed to the shell side of the device at 6 liters per minute with no flow on the tube side. Both end of the device were uncapped and expose to air. Visual inspected the device daily. Any accumulation of oil on the tube side indicated device failure. The result from the test is listed in the Table 4. The test set up is generally shown in Fig 8 and described in Example 3.

The results of the tests show that a perfluorinated exchange device with one or more hollow conduits bonded to the housing, the housing prepared with one or more grooves, remains integral under these test conditions.

**Table 4. Integrity Test Result for device made from co-extruded tubing with grooved shell (SI units)**

| Time | Fluid Temperature(C) | Fluid pressure (KN/m²) | Duration (hours) | Device Integrity |
|---|---|---|---|---|
| Day 1 | 140 | 344.7 | 24 | Passed |
| Day 2 | 160 | 344.7 | 24 | Passed |
| Day 3 | 180 | 344.7 | 24 | Passed |
| Day 4 | 200 | 344.7 | 24 | Passed |
| Day 5 -10 | 140 | 344.7 | 100 | Passed |

**Table 4. Integrity Test Result for device made from co-extruded tubing with grooved shell (Imperial units)**

| Time | Fluid Temperature (C) | Fluid pressure (psig) | Duration (hours) | Device Integrity |
|---|---|---|---|---|
| Day 1 | 140 | 50 | 24 | Passed |
| Day 2 | 160 | 50 | 24 | Passed |
| Day 3 | 180 | 50 | 24 | Passed |
| Day 4 | 200 | 50 | 24 | Passed |
| Day 5-10 | 140 | 50 | 100 | Passed |

### EXAMPLE 6

This example illustrates potting a mixture of co-extruded thermoplastic hollow tubing (MFA outer wall and PFA inner wall) and hollow tubing made from MFA to make an exchange device.

Co-extruded tubing device example. A bundle of 650 twisted 42.6 twist per metre (13 twists per foot) and looped co-extruded tubing was made. Approximately 2/3 of the 650 tube bundle were hollow tubes made from MFA only, approximately 1/3 of the 650 rubes were made from co-extruded MFA/PFA hollow tubes. The tubing was about 22.1 cm (8.7) long, with 0.11mm (0.0042") internal diameter and a wall thickness of about 0.15mm (0.006"). The two tubing materials were: hollow tubes of MFA only, and co-extruded hollow tubes with an MFA outer layer and a PFA (Dupont 450 HP) inner layer. For the co-extroded tubes, both the MFA and MFA layers had a thickness of about 0.076mm (0.003 inches), total wall thickness of about 0.15mm (0.006 inches). The bundle was placed in a shell made from MFA, having a 5.7 cm (2.25") ID, 7.3 cm (2.88") OD and 22.1 cm (8.7") long. The shell contained 3 internal grooves on both ends. Each groove was 0.25 cm in depth and 0.15cm in width. The inside shell wall on each end was sintered with a layer of powdered MFA.

The packing density was approximately 40%. The shell was placed in a heater block with a 10.2 cm (4") ID by 10.2 cm (4") deep cavity. The cavity was lined with a layer of aluminum foil. The shell was held vertically in the cavity with clamp. About 310grams of Ausimont's MFA 940AX resin was poured into the space between the shell and the cavity wall. The heater block was then heated to 295 °C and held at that temperature for 48 hours. After 2 days the heater block was cooled slowly to 150 °C and then to room temperature. The shell with tubing was removed. The opposing end of the tubing was sealed to the opposite end of the housing using a similar potting procedure. A cut was made across the diameter of the shell through the pots, at a position above the looped ends in the bundle. Excess potting material was removed. Two 19mm (¾") PFA fluid fittings were thermally bonded to the shell.

The device was tested for fluid integrity under the following conditions, hot oil fluid heated at a temperature of fro 100 to 140 °C under pressure was fed into the shell side of the device at 6 liters per minute with no fluid flow on the tube side. Both-end of the device were uncapped and expose to air. The device was visually inspected daily. Any accumulation of oil on the tube side indicated device failure. The conditions and result from the test is listed in the Table 5. The test set up is shown in FIG. 8 and described in Example 3

**Table 5. Integrity Test Result for device made from co-extruded tubing with grooved shell (SI units)**

| Time | Fluid Temperature(C) | Fluid pressure (KN/m²) | Duration(hours) | Device Integrity |
|---|---|---|---|---|
| Day 1 | 100 | 344.7 | 24 | Passed |
| Day 2 | 120 | 344.7 | 24 | Passed |
| Day 3 | 140 | 344.7 | 24 | Passed for fibers, housing fluid fitting failed |

**Table 5. Integrity Test Result for device made from co-extruded tubing with grooved shell (Imperial units)**

| Time | Fluid Temperature (C) | Fluid pressure (psig) | Duration (hours) | Device Integrity |
|---|---|---|---|---|
| Day 1 | 100 | 50 | 24 | Passed |
| Day 2 | 120 | 50 | 24 | Passed |
| Day 3 | 140 | 50 | 24 | Passed for fibers, housing fluid fitting failed |

The results of the tests show that an exchange device of the present invention having a mixture of hollow thermoplastic conduits and hollow co-etruded thermoplastic conduits and one or more grooves in the housing can remain integral up to a temperature of 140 °C and pressures of 344.7 KN/m² (50 psig) for at least 24 hours.

## Claims

1. An exchange device comprising:
one or more co-extruded thermoplastic hollow conduits (130) fused at a first end portion of the hollow conduits to a first thermoplastic resin (106); said first thermoplastic resin fused to a surface of a first sleeve or to a surface of a first end of a thermoplastic housing (124) in a terminal end block structure; and
a second end portion of the one or more co-extruded thermoplastic hollow conduits fused with a second thermoplastic resin (114); said second thermoplastic resin fused to a surface of a second sleeve or to a surface of a second end of the thermoplastic housing (124) in a terminal end block structure,
**characterized in that** the co-extruded thermoplastic hollow conduits have an outer layer that include a thermoplastic with a lower melting point or melt flow index than the innermost layer thereof, the layers of the co-extruded thermoplastic hollow conduits being thermally bonded or fused to one another.

2. The exchange device of claim 1,
a)wherein the ends of the hollow conduits of the terminal end block structure are opened to fluid flow, or
b) wherein said housing or sleeve includes fluid fittings, or
c) where the outer layer of the co-extruded conduit includes a thermally conductive material, or
d) where the co-extruded conduits have an inner thermoplastic layer thermally bonded to an outer thermoplastic layer, the outer thermoplastic layer fusing with said first or second thermoplastic resin in the exchange device.

3. The exchange device of claim 1 or 2, wherein said first sleeve or said first end of said housing, or said second sleeve or second end of said housing includes, on the interior surface thereof, structures (104, 116) wherein the first or second thermoplastic resin bonds with the structures.

4. The exchange device of claim 3, wherein said structures are grooves interconnected by vent channels along a surface of the housing or sleeve wherein the thermoplastic resin bonds with the structure.

5. The exchange device of claim 1 or 2, wherein the thermoplastic is a perfluoropolymer.

6. A method of treating a fluid comprising:
flowing a fluid to be treated on a first side of the one or more thermoplastic hollow conduits of the exchange device of claim 1; and
flowing an exchange fluid on a second side of the thermoplastic hollow conduits of the exchange device of claim 1 to transfer mass, energy, or a combination of these between the first and second fluids through a wall between the first and second side of the hollow conduits.

7. The method of claim 6 wherein
a) thermal energy is transferred, or
b) said conduit wall is non-porous, or
c) said conduit wall is porous.

8. An apparatus comprising:
an exchange device of claim 1, and
a source of exchange fluid connected to a first fluid inlet of the exchange device and a source of process fluid connected to a second fluid inlet of the exchange device, the first and second fluid inlets separated by the hollow conduits, and a fluid controller fluidly connected to an exchange device outlet in fluid communication with the second fluid inlet, the fluid controller providing conditioned fluid to one or more substrates to be treated with said conditioned fluid.

9. The apparatus of claim 8,
a) wherein the exchange device outlet in fluid communication with the second fluid inlet provides conditioned fluid to a tank containing one or more substrates, or
b) wherein the fluid controller is a pump, a dispense pump, or a liquid flow controller, or
c) wherein the exchange fluid is a source of temperature controlled fluid, or
d) wherein the substrate to be treated includes a silicon wafer.

## Patentansprüche

1. Austauschvorrichtung, folgendes umfassend:
eine oder mehrere coextrudierte thermoplastische hohle Leitungen (130), die an einem ersten Endbereich der hohlen Leitungen mit einem ersten thermoplastischen Harz (106) verschmolzen sind, wobei das erste thermoplastische Harz mit einer Oberfläche einer ersten Hülse oder mit einer Oberfläche eines ersten Endes eines thermoplastischen Gehäuses (124) in einer terminalen Endblockstruktur verschmolzen ist, und
einen zweiten Endbereich des einen oder der mehreren coextrudierten thermoplastischen hohlen Leitungen, der mit einem zweiten thermoplastischen Harz (114) verschmolzen ist, wobei das zweite thermoplastische Harz mit einer Oberfläche einer zweiten Hülse oder mit einer Oberfläche eines zweiten Endes des thermoplastischen Gehäuses (124) in einer terminalen Endblockstruktur verschmolzen ist,
**dadurch gekennzeichnet, dass** die coextrudierten thermoplastischen hohlen Leitungen eine Außenschicht aufweisen, die einen Thermoplast mit einem niedrigeren Schmelzpunkt oder Schmelzindex als ihre innerste Schicht aufweisen, wobei die Schichten der coextrudierten thermoplastischen hohlen Leitungen miteinander thermisch verbunden oder verschmolzen sind.

2. Austauschvorrichtung nach Anspruch 1,
a) bei der die Enden der hohlen Leitungen der terminalen Endblockstruktur für eine Fluidströmung geöffnet sind oder
b) bei der das Gehäuse oder die Hülse Fluidfittings aufweist oder
c) wobei die Außenschicht der coextrudierten Leitung ein thermisch leitendes Material aufweist oder
d) wobei die coextrudierten Leitungen eine innere thermoplastische Schicht aufweisen, die mit einer äußeren thermoplastischen Schicht thermisch verbunden ist, und die äußere thermoplastische Schicht mit dem ersten oder zweiten thermoplastischen Harz in der Austauschvorrichtung verschmolzen ist.

3. Austauschvorrichtung nach Anspruch 1 oder 2, bei der die erste Hülse oder das erste Ende des Gehäuses oder die zweite Hülse oder das zweite Ende des Gehäuses, an der Innenseite von diesen, Strukturen (104, 116) aufweist, bei denen das erste oder zweite thermoplastische Harz mit den Strukturen verbunden ist.

4. Austauschvorrichtung nach Anspruch 3, bei der die Strukturen Nuten sind, die miteinander durch Austrittsöffnungen entlang einer Oberfläche des Gehäuse oder der Hülse verbunden sind, in denen das thermoplastische Harz mit der Struktur verbunden ist.

5. Austauschvorrichtung nach Anspruch 1 oder 2, bei der der Thermoplast ein Perfluoropolymer ist.

6. Verfahren zum Behandeln eines Fluids, das folgendes umfasst:
Fließenlassen eines zu behandelnden Fluids an einer ersten Seite des einen oder der mehreren thermoplastischen hohlen Leitungen der Austauschvorrichtung nach Anspruch 1 und
Fließenlassen eines Austauschfluids an einer zweiten Seite der thermoplastischen hohlen Leitungen der Austauschvorrichtung nach Anspruch 1 zum Übertragen von Masse, Energie oder einer Kombination von diesen zwischen dem ersten und zweiten Fluid durch eine Wand zwischen der ersten und zweiten Seite der hohlen Leitungen.

7. Verfahren nach Anspruch 6, bei dem
a) Wärmeenergie übertragen wird oder
b) die Leitungswand nicht-porös ist oder
c) die Leitungswand porös ist.

8. Vorrichtung, folgendes umfassend:
eine Austauschvorrichtung nach Anspruch 1 und
eine Quelle von Austauschfluid, die mit einem ersten Fluideinlass der Austauschvorrichtung verbunden ist, und eine Quelle von Prozessfluid, die mit einem zweiten Fluideinlass der Austauschvorrichtung verbunden ist, wobei der erste und zweite Fluideinlass durch die hohlen Leitungen getrennt sind, und eine Fluidsteuereinrichtung, die fluidmäßig mit einem Auslass der Austauschvorrichtung in Fluidverbindung mit dem zweiten Fluideinlass verbunden ist, wobei die Fluidsteuereinrichtung konditioniertes Fluid an ein oder mehrere Substrate liefert, die mit dem konditionierten Fluid zu behandeln sind.

9. Vorrichtung nach Anspruch 8,
a) bei der der Auslass der Austauschvorrichtung in Fluidverbindung mit dem zweiten Fluideinlass konditioniertes Fluid an einen Behälter liefert, der ein oder mehrere Substrate enthält, oder
b) bei der die Fluidsteuereinrichtung eine Pumpe, eine Ausgabepumpe oder eine Flüssigkeitsstrom-Steuereinrichtung ist oder
c) bei der das Austauschfluid eine Quelle eines temperaturgerführten Fluids ist oder
d) bei der das zu behandelnde Substrat eine Sliziumscheibe beinhaltet.

## Revendications

1. Dispositif d'échanges comprenant :
un ou plusieurs conduits creux (130) coextrudés en matériau thermoplastique fusionnés au niveau d'une première partie d'extrémité des conduits creux à une première résine thermoplastique (106), ladite première résine thermoplastique étant fusionnée à une surface d'un premier manchon ou à une surface d'une première extrémité d'un logement en thermoplastique (124) d'une structure de bloc d'extrémité; et
une deuxième partie d'extrémité du ou des conduits creux coextrudés en matériau thermoplastique fusionnés avec une deuxième résine thermoplastique (114), ladite deuxième résine thermoplastique étant fusionnée à une surface d'un deuxième manchon ou à une surface d'une deuxième extrémité du logement en thermoplastique (124) d'une structure de bloc d'extrémité,
**caractérisé en ce que** les conduits creux coextrudés en matériau thermoplastique possèdent une couche externe qui comprend un thermoplastique dont le point de fusion ou l'indice de fusion MFI est inférieur à celui de leur couche la plus à l'intérieur, les couches des conduits creux coextrudés en matériau thermoplastique étant liées ou fusionnées thermiquement les unes aux autres.

2. Dispositif d'échanges selon la revendication 1,
a) dans lequel les extrémités des conduits creux de la structure de bloc d'extrémité sont ouverts à l'écoulement d'un fluide, ou
b) dans lequel ledit logement ou manchon comprend des raccords de fluides, ou
c) dans lequel la couche externe du conduit coextrudé comprend un matériau thermoconducteur, ou
d) dans lequel les conduits coextrudés possèdent une couche interne thermoplastique liée thermiquement à une couche externe thermoplastique, la couche externe thermoplastique fusionnant avec ladite première ou deuxième résine thermoplastique dans le dispositif d'échanges.

3. Dispositif d'échanges selon la revendication 1 ou la revendication 2, dans lequel ledit premier manchon ou ladite première extrémité dudit logement ou bien ledit deuxième manchon ou ladite deuxième extrémité dudit logement comprend sur sa surface intérieure des structures (104, 116) dans lesquelles la première ou la deuxième résine thermoplastique se lie aux structures.

4. Dispositif d'échanges selon la revendication 3, dans lequel lesdites structures sont des rainures interconnectées par des canaux d'évents le long d'une surface du logement ou manchon, dans lesquelles la résine thermoplastique se lie à la structure.

5. Dispositif d'échanges selon la revendication 1 ou la revendication 2, dans lequel le matériau thermoplastique est un polymère perfluoré.

6. Procédé de traitement d'un fluide, comprenant les étapes consistant à:
faire s'écouler un fluide à traiter sur un premier côté d'un ou plusieurs conduits creux en matériau thermoplastique du dispositif d'échanges selon la revendication 1 ; et
faire s'écouler un fluide d'échange sur un deuxième côté des conduits creux en matériau thermoplastique du dispositif d'échanges selon la revendication 1 afin de réaliser un transfert de masse, d'énergie, ou une combinaison des deux, entre le premier et le deuxième fluide à travers une paroi séparant le premier et le deuxième côté des conduits creux.

7. Procédé selon la revendication 6, dans lequel
a) de l'énergie thermique est transférée, ou
b) ladite paroi de conduit est non poreuse, ou
c) ladite paroi de conduit est poreuse.

8. Appareil comprenant :
un dispositif d'échanges selon la revendication 1, et
une source de fluide d'échange reliée à une première entrée de fluide du dispositif d'échanges et une source de fluide de procédé reliée à une deuxième entrée de fluide du dispositif d'échanges, la première et la deuxième entrée de fluide étant séparées par les conduits creux, et une commande de fluide fluidiquement reliée à une sortie du dispositif d'échanges en communication fluide avec la deuxième entrée de fluide, la commande de fluide fournissant un fluide conditionné à un ou plusieurs substrats destinés à être traités avec ledit fluide conditionné.

9. Appareil selon la revendication 8,
a) dans lequel la sortie du dispositif d'échanges en communication fluide avec la deuxième entrée de fluide alimente un fluide conditionné dans une cuve contenant un ou plusieurs substrats, ou
b) dans lequel la commande de fluide est une pompe, une pompe distributrice ou un régulateur de débit de liquide, ou
c) dans lequel le fluide d'échange est une source de fluide à température contrôlée, ou
d) dans lequel le substrat à traiter comprend une tranche de silicium.
